(19) **Europäisches Patentamt European Patent Office Office européen des brevets**

(11) **EP 4 261 471 B1**

(12) **EUROPEAN PATENT SPECIFICATION**

(45) Date of publication and mention of the grant of the patent:
**31.12.2025 Bulletin 2026/01**

(21) Application number: **21918938.8**

(22) Date of filing: **07.09.2021**

(51) International Patent Classification (IPC):
$F24F\ 140/10^{(2018.01)}$     $F24F\ 11/77^{(2018.01)}$
$F24F\ 110/12^{(2018.01)}$     $F24F\ 11/36^{(2018.01)}$
$F25B\ 13/00^{(2006.01)}$      $F25B\ 49/02^{(2006.01)}$
$F25B\ 49/00^{(2006.01)}$

(52) Cooperative Patent Classification (CPC):
**F24F 11/36; F25B 13/00; F25B 49/005; F25B 49/02;** F24F 2110/12; F25B 2500/19; F25B 2700/1931; F25B 2700/1933; F25B 2700/195; F25B 2700/21151; F25B 2700/21152; F25B 2700/21161; F25B 2700/21162; F25B 2700/21163; Y02B 30/70

(86) International application number:
**PCT/CN2021/116969**

(87) International publication number:
**WO 2022/151747 (21.07.2022 Gazette 2022/29)**

(54) **METHOD FOR DETECTING A REFRIGERANT STATE, ASSOCIATED APPARATUS, AND COMPUTER-READABLE MEDIUM**

VERFAHREN ZUR BESTIMMUNG DES ZUSTANDS EINES KÄLTEMITTELS, ASSOZIIERTE VORRICHTUNG UND SPEICHERMEDIUM

PROCÉDÉ DE DÉTECTION DE L'ÉTAT D'UN RÉFRIGERANT, DISPOSITIF ASSOCIÉ ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2021 CN 202110055363**

(43) Date of publication of application:
**18.10.2023 Bulletin 2023/42**

(73) Proprietors:
• **GD Midea Heating & Ventilating Equipment Co., Ltd.**
  **Foshan, Guangdong 528311 (CN)**
• **Midea Group Co., Ltd.**
  **Foshan, Guangdong 528311 (CN)**

(72) Inventors:
• **LI, Zhongzhen**
  **Foshan, Guangdong 528311 (CN)**
• **FAN, Bo**
  **Foshan, Guangdong 528311 (CN)**

(74) Representative: **RGTH**
  **Patentanwälte PartGmbB**
  **Neuer Wall 10**
  **20354 Hamburg (DE)**

(56) References cited:
WO-A1-2017/013757     CN-A- 101 506 600
CN-A- 107 642 879      CN-A- 107 917 512
CN-A- 108 375 170      CN-A- 108 759 007
CN-A- 110 579 039      CN-A- 110 940 059
CN-A- 111 059 709      CN-A- 112 033 040
JP-A- H04 283 362      JP-B2- 6 387 276
KR-A- 19990 024 533    US-A1- 2020 200 457

**Description**

TECHNICAL FIELD

The present invention relates to the technical field of air conditioning, and more particularly, relates to an air conditioning system, and a method for detecting a refrigerant state and apparatus thereof.

BACKGROUND

With continuous development of the air-conditioning technology and the promotion of application of air conditioners, air conditioners are more and more popular in people's daily production and work and life, and people are putting more and more emphasis on the safety requirements of air conditioners, including the detection of refrigerant leakage. The refrigerant state of an air conditioning system is difficult to determine due to the complex installation conditions of the air conditioning system, the variability of operating conditions and use conditions. The refrigerant state determination is a key for determination of the operation state of the air conditioning system and is also a basis for determination of refrigerant leakage.

JP 6 387276 B2 discloses a refrigeration cycle apparatus including a compressor that sucks in and compresses refrigerant, and discharges refrigerant discharged from the compressor through a condenser, an expansion valve, and an evaporator, and returns the refrigerant to the compressor; an indoor fan that sucks indoor air; a dust removing filter that is disposed in a suction air passage of the indoor fan; a filter that removes dust when the refrigeration cycle operates in a state where dust is not attached to the filter Predicting the saturation temperature based on the state change amount of the refrigeration cycle and determining the saturation temperature based on the amount of deviation between the predicted saturation temperature and the actual saturation temperature of the refrigerant during the operation of the refrigeration cycle.

US 2020/200457 A1 discloses refrigeration cycle apparatus having a refrigerant circuit having a compressor, a condenser, a supercooler, an expansion device, and an evaporator connected by a refrigerant pipe, and configured to circulate refrigerant containing refrigerant having a temperature gradient, wherein the supercooler sets a degree of supercooling of the refrigerant, which is a temperature difference between a temperature from the condenser to a refrigerant flow inlet of the supercooler and a temperature in a refrigerant flow outlet on a downstream side of the supercooler, lo be larger than the temperature gradient generated at a time of refrigerant shortage of the refrigerant between the refrigerant flow inlet and the refrigerant flow outlet of the supercooler, the refrigeration cycle apparatus including a refrigerant amount determination unit configured to compare a determination threshold value set to a value larger than the temperature gradient of the refrigerant with the degree of supercooling of the refrigerant, and determine whether or not there is a shortage of a refrigerant amount filled in the refrigerant circuit.

SUMMARY

Technical Problem

One objective of the embodiments of the present disclosure is to provide an air conditioning system and a method for detecting a refrigerant state and apparatus thereof, which may accurately obtain the refrigerant state of the air conditioning system according to the operating parameter of the air conditioning system, thereby improving the safety and reliability of the air conditioning system during use.

Technical Solutions To The Problem

Technical Solutions

To solve the above technical problem, the technical solutions adopted in the embodiments of the present invention are defined in the appended independent claims.

Benefits Of This Invention

The method for detecting a refrigerant state provided in a first aspect of the embodiments of the present invention as defined by appended independent claim 1 may accurately obtain the refrigerant state of an air conditioning system according to the operating parameter of the air conditioning system, and improve the safety and reliability of the air conditioning system during use, by adjusting the first operating parameters of the air conditioning system; where the first operating parameters include a frequency of a compressor, a wind speed setting, and an opening degree of an electronic expansion valve; collecting the second operating parameters of the air conditioning system after the adjustment of the first operating parameters has been completed for a preset duration; where the second operating parameters include an outdoor environment temperature and operating parameter of the compressor; and determining the refrigerant state of the air conditioning system according to the second operating parameters, wherein said determining the refrigerant state of the air conditioning system from the second operating parameters comprises: determining a refrigerant state at an inlet of a heat exchanger from the outdoor environment temperature and the operating parameters of the compressor, and wherein said determining a refrigerant state at an inlet of a heat exchanger from the outdoor environment temperature and the operating parameters of the compressor comprises: obtaining a heat exchanger inlet temperature and a saturation temperature corresponding to a heat exchanger inlet pressure from the outdoor environment temperature and the operating parameters of the compressor; determining that the refrigerant at the inlet of the heat exchanger is in an overheating state in case the heat exchanger inlet temperature is greater than a sum of the saturation temperature corresponding to the heat exchanger inlet pressure and a first preset temperature threshold; and determining that the refrigerant at the inlet of the heat exchanger is in a non-overheating state and adjusting the first operating parameters in case the heat exchanger inlet temperature is less than or equal to the sum of the saturation temperature corresponding to the heat exchanger inlet pressure and the first preset temperature threshold wherein said obtaining a heat exchanger inlet temperature and a saturation temperature corresponding to a heat exchanger inlet pressure from the outdoor environment temperature and the operating parameter of the compressor comprises: obtaining a refrigerant flow rate from the frequency, an exhaust pressure, a return gas pressure and a return gas temperature of the compressor; obtaining a pressure drop of an exhaust pipeline of the compressor from an exhaust temperature and the exhaust pressure of the compressor and the refrigerant flow rate; obtaining a heat leakage of the exhaust pipeline of the compressor from the outdoor environment temperature, the exhaust temperature of the compressor, and the refrigerant flow rate; obtaining the heat exchanger inlet pressure from the exhaust pressure of the compressor and the pressure drop of the exhaust pipeline; obtaining the heat exchanger inlet temperature from the exhaust temperature of the compressor, the refrigerant flow rate, and the heat leakage of the exhaust pipeline; and obtaining the saturation temperature corresponding to the heat exchanger inlet pressure from the heat exchanger inlet pressure.

It may be understood that, for the benefits of other aspects defined by the further independent claims, one may refer to the related description in the first aspect, and details are not repeated here.

BRIEF DESCRIPTION OF THE DRAWINGS

Description Of The Drawings

To more clearly illustrate the technical solutions in the embodiments of the invention, the figures to be referenced in the description of the embodiments or prior art will be briefly described in the following. Apparently, the described figures are merely some of the embodiments of the present disclosure, and it is possible for those skilled in the art to obtain other figures on the basis of these figures without paying creative labor.

FIG. 1 is a schematic diagram of a first structure of an air conditioning system to be used in the context of the present invention;

FIG. 2 is a schematic diagram of a second structure of an air conditioning system to be used in the context of the present invention;

FIG. 3 is a schematic diagram of a first process of a method for detecting a refrigerant state useful to understand the present invention;

FIG. 4 is a schematic diagram of a second process of a method for detecting a refrigerant state useful to understand the present invention;

FIG. 5 is a schematic diagram of a third process of a method for detecting a refrigerant state useful to understand the present invention;

FIG. 6 is a schematic diagram of a fourth process of a method for detecting a refrigerant state according to a part of the present invention;

FIG. 7 is a schematic diagram of a fifth process of a method for detecting a refrigerant state which may supplement the method of the present invention;

FIG. 8 is a schematic diagram of a sixth process of a method for detecting a refrigerant state which may supplement the method of the present invention;

FIG. 9 is a schematic diagram of a seventh process of a method for detecting a refrigerant state which may supplement the method of the present invention;

FIG. 10 is a schematic diagram of an eighth process of a method for detecting a refrigerant state which may supplement the method of the present invention;

FIG. 11 is a schematic diagram of a structure of an apparatus for detecting a refrigerant state according to the present invention when comprising an implementation of the method of appended independent claim 1.

FIG. 12 is a schematic diagram of a third structure of an air conditioning system which may be used in the context of the present invention.

DETAILED DESCRIPTION OF THE EMBODIMENTS

In the following descriptions, for purposes of explanation instead of limitation, specific system architectures, technical details, and the like are set forth in order to provide a thorough understanding of the embodiments of the present invention. However, it will be apparent to those skilled in the art that the present disclosure may be implemented in other embodiments without these specific details as long as the resulting embodiment still comprises all features of at least one of the appended independent claims. In other instances, detailed descriptions of well-known systems, apparatuses, circuits, and methods are omitted so as not to obscure the description of the present disclosure with unnecessary details.

It will be understood that the terms "comprises" when used in the description of this disclosure and the appended claims, specifies the presence of stated features, integers, steps, operations, elements, and/or components, but does not preclude the presence or addition of one or more other features, integers, steps, operations, elements, components, and/or groups thereof.

It will also be understood that the term "and/or" as used in the description of the disclosure and the appended claims refers to and encompasses any and all possible combinations of one or more of the associated listed items.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

In addition, in the descriptions of this disclosure and the appended claims, the terms "first", "second", "third", and the like are merely intended for a purpose of differentiated description, but shall not be understood as an indication or an implication of relative importance.

The referenced "one embodiment" or "some embodiments" throughout the description of this disclosure means that one or more embodiments of the present disclosure include particular features, structures, or characteristics described in combination with the embodiment(s). Thus, the statements "in one embodiment", "in some embodiments", "in other embodiments", "in further embodiments" and the like appearing at different places in this description are not necessarily referring to the same embodiment(s), but rather mean "one or more but not all embodiments" unless otherwise specifically emphasized. The terms "including", "comprising", "having" and variations thereof mean "including, but not limited to", unless otherwise specifically emphasized.

The embodiments of this invention provide a method for detecting a refrigerant state, as defined by appended independent claim 1, which may be executed by a processor of an air conditioning system when running a corresponding computer program. The air conditioning system may be a stand-alone air conditioning system, or may be a multi-unit air conditioning system. The stand-alone air conditioning system and the multi-unit air conditioning system may be cooling-only systems for cooling only.

In practice, an air conditioning system may include, but is not limited to, a memory, a processor, and a compressor, a heat exchanger, an electronic expansion valve, a pressure sensor, a temperature sensor, etc. which are connected to the processor, and may further include an oil separator, a four-way valve, a gas-liquid separator, an economizer, an evaporator, and pipelines connecting the components, and the like.

The air conditioning system described in the embodiments of this disclosure does not constitute a limitation on the air conditioning system, and the air conditioning system may include more or fewer components, or some components, or different component arrangements.

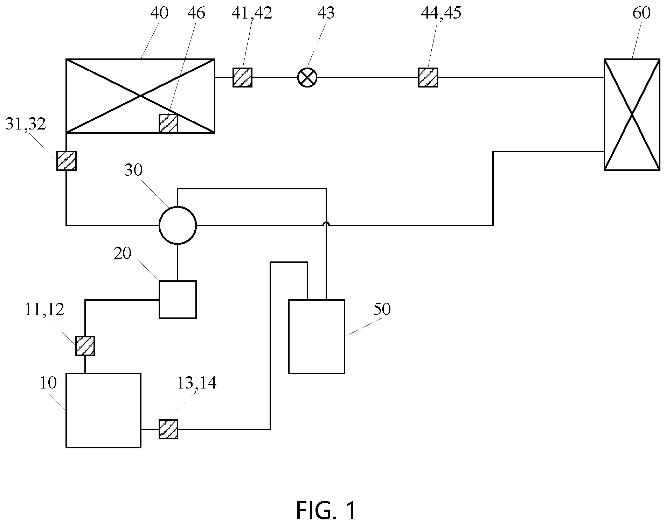

As shown in FIG. 1, a schematic diagram of a structural of an air conditioning system that does not include an economizer is shown as an example, in which the air conditioning system includes a compressor 10, an oil separator 20, a four-way valve 30, a heat exchanger 40, a gas-liquid separator 50, and an evaporator 60;

In which the compressor 10 and the oil separator 20 are connected through an exhaust pipe therebetween, which is provided with an exhaust pressure sensor 11 and an exhaust temperature sensor 12; the compressor 10 and the gas-liquid separator 50 are connected through a first return pipe therebetween, which is provided with a return gas pressure sensor 13 and a return gas temperature sensor 14;

The oil separator 20 and the four-way valve 30 are connected through a high-pressure air pipe;

The four-way valve 30 and the heat exchanger 40 are connected through a condenser pipe therebetween, which is provided with a heat exchanger inlet pressure sensor 31 and a heat exchanger inlet temperature sensor 32; the four-way valve 30 and the gas-liquid separator 50 are connected through a second return pipe therebetween, and the four-way valve 30 and the evaporator 60 are connected through a low-pressure air pipe therebetween;

The heat exchanger 40 and the evaporator 60 are connected through a high-pressure liquid pipe therebetween, which is provided with a heat exchanger outlet pressure sensor 41, a heat exchanger outlet temperature sensor 42, a first electronic expansion valve 43, a high-pressure liquid pipe outlet pressure sensor 44 and a high-pressure liquid pipe outlet temperature sensor 45; the heat exchanger 40 is provided with an outdoor environment temperature sensor 46.

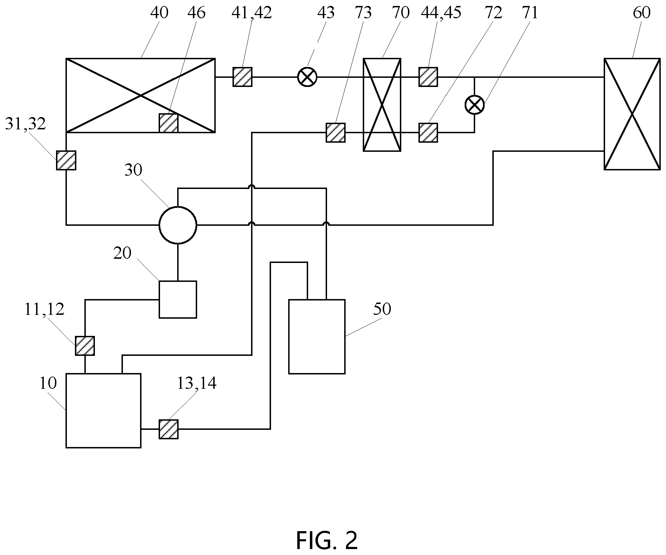

As shown in FIG. 2, a schematic diagram of a structural of an air conditioning system that includes an economizer is shown as an example, in which the air conditioning system further includes an economizer 70 in addition to those shown in FIG. 1. An inlet of the economizer 70 is connected to the high-pressure liquid pipe 41 through an input pipe, which is provided with a second electronic expansion valve 71 and an economizer inlet temperature sensor 72. An outlet of the economizer 70 is connected to the compressor 10 through an output pipe, which is provided with an economizer outlet temperature sensor 73.

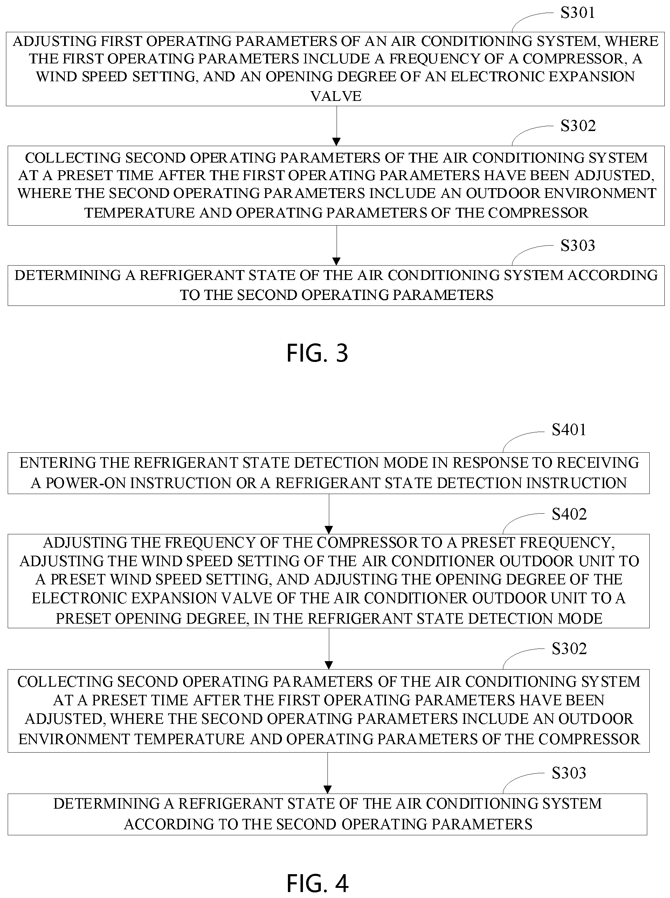

As shown in FIG. 3, the method for detecting a refrigerant state for an air conditioning system includes the following steps S301 to S303:

At step S301, adjust first operating parameters of the air conditioning system, where the first operating parameters include a frequency of the compressor, a wind speed setting, and an opening degree of the electronic expansion valve.

In practice, the refrigerant state detection may be immediately and automatically performed after the air conditioning system is powered on, or may be performed automatically at any time when a user needs to after the air conditioning system is powered on. For example, the air conditioning system may be powered on when receiving a starting instruction sent by the user and adjust the first operating parameters of the air conditioning system to specified values; and may also adjust the first operating parameters of the air conditioning system to the specified values when receiving the refrigerant state detection instruction sent by the user after the air conditioning system is power on. The first operating parameters include the frequency of the compressor of the outdoor unit of the air conditioning system, the wind speed setting of the outdoor unit, and the opening degree of the electronic expansion valve of the outdoor unit. In case where the air conditioning system does not include an economizer, the electronic expansion valve may be the electronic expansion valve of the outdoor unit, for example, the first electronic expansion valve 43 shown in FIG. 1; in case where the air conditioning system includes an economizer, the electronic expansion valves may include both the electronic expansion valve of the outdoor unit and an electronic expansion valve of the economizer, for example, the first electronic expansion valve 43 and the second electronic expansion valve 71 shown in FIG. 2.

At step S302, collect second operating parameters of the air conditioning system after the adjustment of the first operating parameters has been completed for a preset duration, where the second operating parameters include an outdoor environment temperature and an operating parameter of the compressor.

At step S303, determine a refrigerant state of the air conditioning system according to the second operating parameters.

In practice, the second operating parameters of the air conditioning system may be collected after the adjustment of the first operating parameters has been completed for a preset duration to enable the air conditioning system to stably operate in the refrigerant state detection mode, and the refrigerant state of the air conditioning system may be determined according to the second operating parameters. The preset duration may be customized by the user according to actual needs or use a value from the factory default settings, as long as the air conditioning system may stably operate after entering the refrigerant state detection mode for the preset duration.

In practice, the outdoor environment temperature is the temperature of the outdoor environment where the outdoor unit is located, and may be detected by a temperature sensor positioned outdoors, for example, the outdoor environment temperature sensor 47 shown in FIG. 1 or FIG. 2. The operating parameter of the compressor may include, but are not limited to, the frequency of the compressor, an exhaust pressure, a return gas pressure, a return gas temperature, an exhaust temperature, and the like. The exhaust pressure, the return gas pressure, the return gas temperature, and the exhaust temperature of the compressor may be detected by respective pressure sensors and temperature sensors, such as the exhaust pressure sensor 12, the return gas pressure sensor 15, the return gas temperature sensor 16, and the exhaust temperature sensor 13 shown in FIG. 1 or FIG. 2. In case where the air conditioning system does not include an economizer, the second operating parameters may further include a wind speed setting of the outdoor unit, an opening degree of the first electronic expansion valve, etc. In case where the air conditioning system includes an economizer, the second operating parameters may further include a wind speed setting of the outdoor unit, an economizer inlet temperature and an economizer outlet temperature, etc. The economizer inlet and outlet temperatures may be detected by a respective temperature sensor, for example, the economizer inlet temperature sensor 72 and economizer outlet temperature sensor 73 shown in FIG. 2.

As shown in FIG. 4, step S301 includes the following steps S401 and S402:

At step S401, enter the refrigerant state detection mode in response to receiving a power-on instruction or a refrigerant state detection instruction;

At step S402, adjust the frequency of the compressor to a preset frequency, adjust the wind speed setting of the air conditioner outdoor unit to a preset wind speed setting, and adjust the opening degree of the electronic expansion valve of the air conditioner outdoor unit to a preset opening degree in the refrigerant state detection mode.

In practice, the user may input the power-on instruction or the refrigerant state detection instruction through a human-computer interaction device of the air conditioning system according to actual needs, or send the power-on instruction or the refrigerant state detection instruction to the air conditioning system through a terminal device in communication connection with the air conditioning system, so as to control the air conditioning system to enter the refrigerant state detection mode. The human-computer interaction device of the air conditioning system may include at least one of a physical button, a touch sensor, a gesture recognition sensor and a speech recognition unit, so that the user may input the instruction with a corresponding touch control, gesture control, or a speech control.

In practice, the physical button and the touch sensor may be provided at any position of the air conditioning system, for example, at a control panel. The touch control of the physical button may be specifically by pressing or toggling. The touch control of the touch sensor may be specifically by pressing or touching, etc.

In practice, the gesture recognition sensor may be provided at any position of the air conditioning system, for example, outside the housing near the vent. The gesture for controlling the air conditioning system may be customized by the user according to actual needs or use a gesture from the factory default settings.

In practice, the speech recognition unit may include a microphone and a speech recognition chip, or may only include a microphone and a processor of the air conditioning system may implement speech recognition. The speech used to control the air conditioner may be customized by the user according to actual needs or may use a speech from the factory default settings.

In practice, the terminal device may be a mobile phone, a smart wristband, a tablet computer, a notebook computer, a netbook, a personal digital assistant (PDA), etc. which have a wireless communication function and may be in wireless communication connection with the air conditioning system. The embodiments of the disclosure provide no limitation on the specific type of the terminal device. The user may control, by means of any human-computer interaction supported by the terminal device, the terminal device to send an instruction to the air conditioning system. The human-computer interaction supported by the terminal device may be the same as the air conditioning system, and details are not described herein again.

In practice, the preset frequency, the preset wind speed setting, and the preset opening degree may be customized by the user according to actual needs or use those from the factory default settings, as long as the air conditioning system may gradually tend to be stable after entering the refrigerant state detection mode.

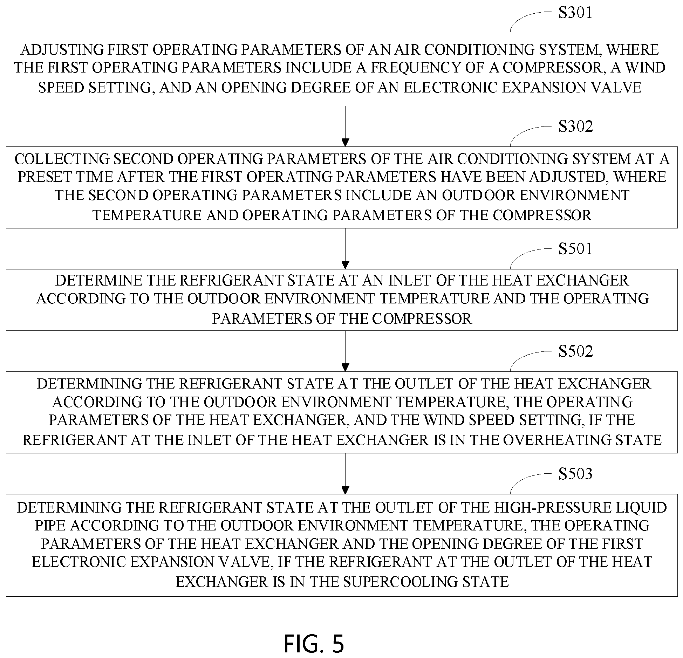

As shown in FIG. 5, step S303 includes:
At step S501, determine the refrigerant state at an inlet of the heat exchanger according to the outdoor environment temperature and the operating parameter of the compressor.

In practice, the refrigerant state at the inlet of the heat exchanger may be determined according to the outdoor environment temperature and the operating parameter of the compressor. Specifically, it is possible to calculate the heat exchanger inlet temperature and a saturation temperature corresponding to the heat exchanger inlet pressure according to the outdoor environment temperature and the frequency, the exhaust pressure, the return gas pressure, the return gas temperature and the exhaust temperature of the compressor, and then determine the refrigerant state at the inlet of the heat exchanger according to the heat exchanger inlet temperature and the saturation temperature corresponding to the heat exchanger inlet pressure.

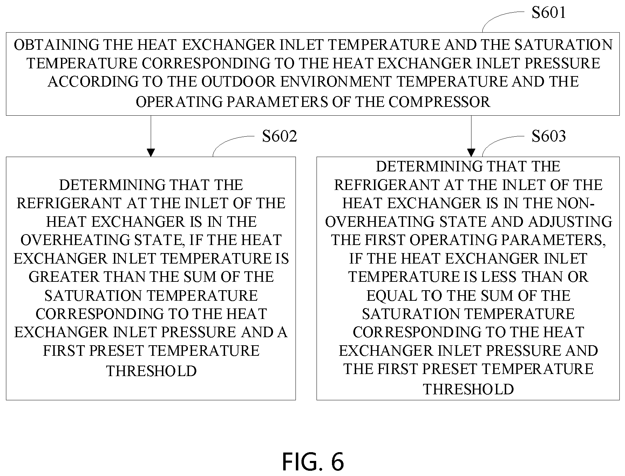

As shown in FIG. 6, according to the present invention, step S501 includes the following steps S601 to S603:

At step S601: obtain the heat exchanger inlet temperature and the saturation temperature corresponding to the heat exchanger inlet pressure according to the outdoor environment temperature and the operating parameter of the compressor;

At step S602: if the heat exchanger inlet temperature is greater than the sum of the saturation temperature corresponding to the heat exchanger inlet pressure and a first preset temperature threshold, then determine that the refrigerant at the inlet of the heat exchanger is in an overheating state;

At step S603, if the heat exchanger inlet temperature is less than or equal to the sum of the saturation temperature corresponding to the heat exchanger inlet pressure and the first preset temperature threshold, then determine that the refrigerant at the inlet of the heat exchanger is in a non-overheating state, and adjust the first operating parameters.

In practice, after the heat exchanger inlet temperature and the saturation temperature corresponding to the heat exchanger inlet pressure have been calculated, it is possible to compare the heat exchanger inlet temperature with the sum of the saturation temperature corresponding to the heat exchanger inlet pressure and the first preset temperature thresholds, and then determine the refrigerant state at the inlet of the heat exchanger according to the comparison result. If the refrigerant at the inlet of the heat exchanger is in the overheating state, then proceed to the next step, to continue to detect the refrigerant state at the outlet of the heat exchanger. If the refrigerant at the inlet of the heat exchanger is in the non-overheating state, then return to step S301, to continue to adjust the first operating parameters. The first preset temperature threshold may be customized by the user according to actual needs or use a value from the factory default settings, for example, any value between 1°C and 3°C.

Step S601 includes the following steps:

obtaining a refrigerant flow rate according to the frequency, the exhaust pressure, the return gas pressure and the return gas temperature of the compressor;
obtaining a pressure drop of an exhaust pipeline of the compressor according to the exhaust temperature and the exhaust pressure of the compressor and the refrigerant flow rate;
obtaining a heat leakage of the exhaust pipeline of the compressor according to the outdoor environment temperature, the exhaust temperature of the compressor, and the refrigerant flow rate;
obtaining the heat exchanger inlet pressure according to the exhaust pressure of the compressor and the pressure drop of the exhaust pipeline;
obtaining the heat exchanger inlet temperature according to the exhaust temperature of the compressor, the refrigerant flow rate, and the heat leakage of the exhaust pipeline;
obtaining the saturation temperature corresponding to the heat exchanger inlet pressure according to the heat exchanger inlet pressure.

In practice, firstly a saturation temperature corresponding to the exhaust pressure of the compressor, that is, the condensation temperature, is calculated according to the exhaust pressure of the compressor, and a saturation temperature corresponding to the return gas pressure of the compressor, that is, the evaporation temperature, is calculated according to the return gas pressure of the compressor; and then the refrigerant flow rate is calculated according to the 10 coefficients of the compressor flow related to the frequency, the exhaust pressure, the return gas pressure and the return gas temperature of the compressor, the condensation temperature and the evaporation temperature.

In an embodiment, the calculation formulas of the refrigerant flow rate are as follows:

$$m=k1+k2*Te+k3*Tc+k4*Te^2+k5*Te*Tc+K6*Tc^2+k7*Te^3+k8*Te^2*Tc+k9*Te*Tc^2+k10*Tc^3$$

$$Te=b1/(\ln(ps)-b2)-b3$$

$$Tc=b1/(\ln(pd)-b2)-b3$$

The calculation formula of the pressure drop of the exhaust pipeline of the compressor is as follows:

$$dp1=f1(m,Td,pd)=A1*m*\exp(B1*Tc)*(Td-Tc)$$

The calculation formula of the heat leakage of the exhaust pipeline of the compressor is as follows:

$$Q1=f2(m,Td,T0)=(Td-T0)*A2*m$$

The calculation formula of the heat exchanger inlet pressure is as follows:

$$p1=pd-dp1$$

The calculation formula of the heat exchanger inlet temperature is as follows:

$$T1=Td-Q1/(m*B2*Tds)$$

The calculation formula of the saturation temperature corresponding to the heat exchanger inlet pressure is as follows:

$$T1s=b1/(\ln(p1)-b2)-b3$$

where m is the refrigerant flow rate, k1~k10 are the ten coefficients related to the frequency, the exhaust pressure pd, the return gas pressure ps and the return gas temperature Ts of the compressor, Te is the saturation temperature corresponding to the return gas pressure of the compressor, Tc is the saturation temperature corresponding to the exhaust pressure pd of the compressor, and B1~B2 and b1~b3 are refrigerant physical parameters related to the refrigerant type;

dp1 is the pressure drop of the exhaust pipeline of the compressor, f1(m, Td, pd) is a function related to the exhaust temperature Td and the exhaust pressure pd of the compressor and the refrigerant flow rate m, and A1~A2 are parameters related to the structure of the exhaust pipeline;

Q1 is the heat leakage of the exhaust pipeline of the compressor, and f2(m, Td, T0) is a function related to the outdoor environment temperature T0, the exhaust temperature Td of the compressor, and the refrigerant flow rate m;

p1 is the heat exchanger inlet pressure;

T1 is the heat exchanger inlet temperature;

T1s is the saturation temperature corresponding to the heat exchanger inlet pressure;

* is a multiplication operator, ^ is a exponentiation operator, / is an division operator, ln () is a logarithmic function.

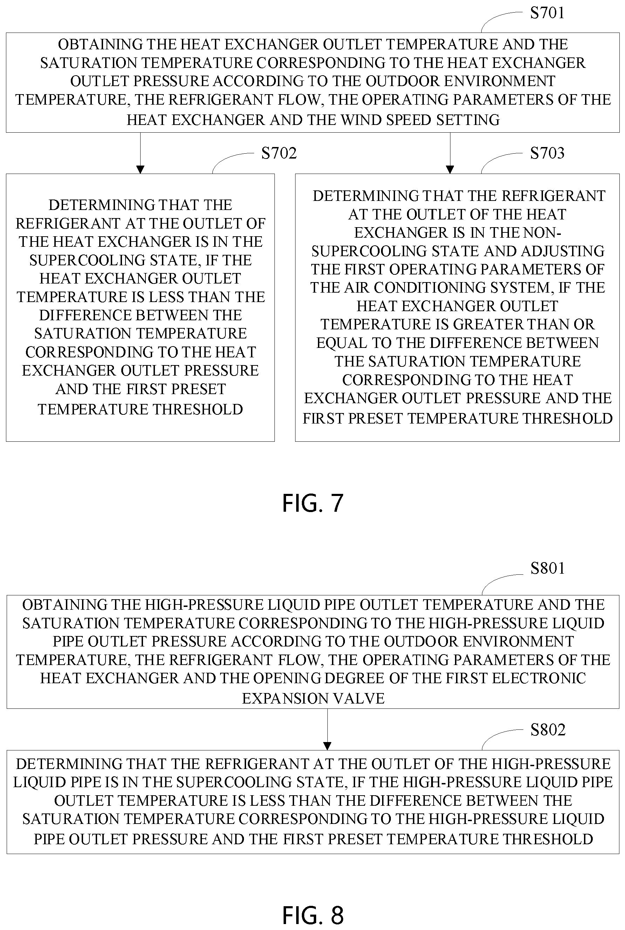

As shown in FIG. 5, in one embodiment, step S303 further includes:
Step S502, determining the refrigerant state at the outlet of the heat exchanger according to the outdoor environment temperature, the operating parameter of the heat exchanger, and the wind speed setting, if the refrigerant at the inlet of the heat exchanger is in an overheating state.
In practice, if the refrigerant at the inlet of the heat exchanger is in the overheating state, then it is possible to further determine the refrigerant state at the outlet of the heat exchanger according to the outdoor environment temperature, the operating parameter of the heat exchanger, and the wind speed setting. The operating parameter of the heat exchanger may include, but are not limited to, an inlet pressure, an outlet pressure, an inlet temperature and an outlet temperature of the heat exchanger, and the like. The inlet pressure, the outlet pressure, the inlet temperature and the outlet temperature of the heat exchanger may be detected by respective pressure sensors and temperature sensors, such as the heat exchanger inlet pressure sensor 31, the heat exchanger outlet pressure sensor 41, the heat exchanger inlet temperature sensor 32, and the heat exchanger outlet temperature sensor 42 shown in FIG. 1 or FIG. 2. Specifically, it is possible to calculate the heat exchanger outlet temperature and a saturation temperature corresponding to the heat exchanger outlet pressure according to the outdoor environment temperature, the refrigerant flow rate, the heat exchanger inlet pressure and inlet temperature, the saturation temperature corresponding to the heat exchanger inlet pressure and the wind speed setting, and then determine the refrigerant state at the outlet of the heat exchanger according to the heat exchanger outlet temperature and the saturation temperature corresponding to the heat exchanger outlet pressure.
As shown in FIG. 7, in one embodiment comprising additional features and method steps beyond the ones defined by appended independent claim 1, step S502 includes the following steps S701 to S703:

At step S701, obtain the heat exchanger outlet temperature and the saturation temperature corresponding to the heat exchanger outlet pressure according to the outdoor environment temperature, the refrigerant flow rate, the operating parameter of the heat exchanger and the wind speed setting;

At step S702, if the heat exchanger outlet temperature is less than a difference between the saturation temperature corresponding to the heat exchanger outlet pressure and the first preset temperature threshold, then determine that the refrigerant at the outlet of the heat exchanger is in a supercooling state.

At step S703, if the heat exchanger outlet temperature is greater than or equal to the difference between the saturation temperature corresponding to the heat exchanger outlet pressure and the first preset temperature threshold, then determine that the refrigerant at the outlet of the heat exchanger is in a non-supercooling state, and adjust the first operating parameters of the air conditioning system.

In practice, after the heat exchanger outlet temperature and the saturation temperature corresponding to the heat exchanger outlet pressure have been calculated, it is possible to compare the heat exchanger outlet temperature with the difference between the saturation temperature corresponding to the heat exchanger outlet pressure and the first preset temperature threshold, then determine the refrigerant state at the outlet of the heat exchanger according to the comparison result. If the refrigerant at the outlet of the heat exchanger is in the supercooling state, then proceed to the next step, to continue to detect the refrigerant state at the outlet of the high-pressure liquid pipe. If the refrigerant at the inlet of the heat exchanger is in the non-supercooling state, then return to step S301, to continue to adjust the first operating parameters.

In one embodiment, step S701 includes the following steps:

obtaining a refrigerant pressure drop of the heat exchanger according to the wind speed setting and the refrigerant flow rate;

obtaining a heat exchange of the heat exchanger according to the outdoor environment temperature, the wind speed setting, the refrigerant flow rate, and the heat exchanger inlet pressure and the inlet temperature;

obtaining the heat exchanger outlet pressure according to the heat exchanger inlet pressure and the refrigerant pressure drop of the heat exchanger;

obtaining the heat exchanger outlet temperature according to the refrigerant flow rate, the heat exchange inlet temperature, the heat exchange of the heat exchange and the saturation temperature corresponding to the heat exchanger inlet pressure;

obtaining the saturation temperature corresponding to the heat exchanger outlet pressure according to the heat exchanger outlet pressure.

In one embodiment, the calculation formula of the refrigerant pressure drop of the heat exchanger is as follows:

$$dp2=f3(m,Fs)=A3*m(c0+c1*Fs)$$

The calculation formula of the heat exchange of the heat exchanger is as follows:

$$Q2=f4(m,T1s,Fs,T0)=A4*M*[A5+A6*(T1s-T0)]*(c2+c3*Fs)$$

The calculation formula of the heat exchanger outlet pressure is as follows:

$$p2=p1-dp2$$

The calculation formula of the heat exchanger outlet temperature is as follows:

$$T2=T1-Q2/(m*B2*T1s)$$

The calculation formula of the saturation temperature corresponding to the heat exchanger outlet pressure is as follows:

$$T2s = b1/(\ln(p2) - b2) - b3$$

where dp2 is the refrigerant pressure drop of the compressor, f3(m, Fs) is a function related to the refrigerant flow rate m and the wind speed setting Fs, A3~A6 are parameters related to the structure of the heat exchanger, and c0~c3 are parameters related to the characteristics of the fan of the outdoor unit;

Q2 is the heat exchange of the heat exchanger, f4(m, T1s, Fs, T0) is a function related to the refrigerant flow rate m, the saturation temperature T1s corresponding to the heat exchanger inlet pressure, the wind speed setting Fs, and the outdoor environment temperature T0;

p2 is the heat exchanger outlet pressure;

T2 is the heat exchanger outlet temperature;

T2s is the saturation temperature corresponding to the heat exchanger outlet pressure.

As shown in FIG. 5, step S303 further includes:
step S503, if the refrigerant at the outlet of the heat exchanger is in the supercooling state, then determining the refrigerant state at the outlet of the high-pressure liquid pipe according to the outdoor environment temperature, the operating parameter of the heat exchanger and the opening degree of the first electronic expansion valve.
In practice, if the refrigerant at the outlet of the heat exchanger is in the supercooling state, then it is possible to further determine the refrigerant state at the outlet of the high-pressure liquid pipe according to the outdoor environment temperature, the operating parameter of the heat exchanger and the opening degree of the first electronic expansion valve. Specifically, it is possible to calculate the high-pressure liquid pipe outlet temperature and a saturation temperature corresponding to the high-pressure liquid pipe outlet pressure according to the outdoor environment temperature, the refrigerant flow rate, the heat exchanger outlet pressure and outlet temperature, the saturation temperature corresponding to the heat exchanger outlet pressure and the opening degree of the first electronic expansion valve, and then determine the refrigerant state at the outlet of the high-pressure liquid pipe according to the high-pressure liquid pipe outlet temperature and the saturation temperature corresponding to the high-pressure liquid pipe outlet pressure.
As shown in FIG. 8, in one embodiment comprising additional features and method steps beyond the ones defined by appended independent claim 1, no matter whether the air conditioning system includes an economizer or not, step S503 includes the following steps S801 and S802:

At S801, obtain the high-pressure liquid pipe outlet temperature and the saturation temperature corresponding to the high-pressure liquid pipe outlet pressure according to the outdoor environment temperature, the refrigerant flow rate, the operating parameter of the heat exchanger and the opening degree of the first electronic expansion valve;

At S802, if the high-pressure liquid pipe outlet temperature is less than a difference between the saturation temperature corresponding to the high-pressure liquid pipe outlet pressure and the first preset temperature threshold, then determine that the refrigerant at the outlet of the high-pressure liquid pipe is in a supercooling state.

In practice, after the high-pressure liquid pipe outlet temperature and the saturation temperature corresponding to the high-pressure liquid pipe outlet pressure have been calculated, it is possible to compare the high-pressure liquid pipe outlet temperature with the difference between the saturation temperature corresponding to the high-pressure liquid pipe outlet pressure and the first preset temperature threshold, and then determine the refrigerant state at the outlet of the high-pressure liquid pipe according to the comparison result. For an air conditioning system without an economizer, it is possible to determine that the refrigerant at the outlet of the high-pressure liquid pipe is in a supercooling state or in a non-supercooling state according to the high-pressure liquid pipe outlet temperature and the saturation temperature corresponding to the high-pressure liquid pipe outlet pressure. For an air conditioning system with an economizer, it is only possible to determine the supercooling state of the refrigerant at the outlet of the high-pressure liquid pipe according to the high-pressure liquid pipe outlet temperature and the saturation temperature corresponding to the high-pressure liquid pipe outlet pressure, and the non-supercooling state should be determined according to an economizer inlet temperature and an economizer outlet temperature.

In one embodiment, step S801 includes the following steps:

obtaining a refrigerant pressure drop of the high-pressure liquid pipe according to the refrigerant flow rate, the heat exchanger outlet temperature and the opening degree of the first electronic expansion valve;

obtaining a heat leakage of the high-pressure liquid pipe according to the outdoor environment temperature, the refrigerant flow rate, and the heat exchanger outlet temperature;

obtaining the high-pressure liquid pipe outlet pressure according to the heat exchanger outlet pressure and the refrigerant pressure drop of the high-pressure liquid pipe;

obtaining the high-pressure liquid pipe outlet temperature according to the refrigerant flow rate, the heat exchanger outlet temperature, the saturation temperature corresponding to the heat exchanger outlet pressure and the heat leakage of the high-pressure liquid pipe;

obtaining the saturation temperature corresponding to the high-pressure liquid pipe outlet pressure according to the high-pressure liquid pipe outlet pressure.

In one embodiment, the calculation formula of the refrigerant pressure drop of the high-pressure liquid pipe is as follows:

$$dp3=f5(m,T2,EXV)=[A7*m+m/(D0+D1*EXV)]*(B3*T2)$$

The calculation formula of the heat leakage of the high-pressure liquid pipe is as follows:

$$Q3=f6(m,T2, T0)=(T2-T0)*A8*m$$

The calculation formula of the high-pressure liquid pipe outlet pressure is as follows:

$$p3=p2-dp3$$

The calculation formula of the high-pressure liquid pipe outlet temperature is as follows:

$$T3=T2-Q3/(m*B2*T2s)$$

The calculation formula of the saturation temperature corresponding to the high-pressure liquid pipe outlet pressure is as follows:

$$T3s=b1/(\ln(p3)-b2)-b3$$

where dp3 is the refrigerant pressure drop of the high-pressure liquid pipe, f5(m, T2, EXV) is a function related to the refrigerant flow rate m, the heat exchanger outlet temperature T2 and the opening degree EXV of the first electronic expansion valve, A7~A8 are parameters related to the structure of the high-pressure liquid pipe, DO~D1 are parameters related to the characteristics of the first electronic expansion valve, and B3 is a refrigerant physical parameter related to the refrigerant type;

Q3 is the heat leakage of the high-pressure liquid pipe, and f6(m, T2, T0) is a function related to the refrigerant flow rate m, the heat exchanger outlet temperature T2 and the outdoor environment temperature T0;

p3 is the high-pressure liquid pipe outlet pressure;

T3 is the high-pressure liquid pipe outlet temperature;

T3s is the saturation temperature corresponding to the high-pressure liquid pipe outlet pressure.

The method for detecting a refrigerant state provided in the embodiments corresponding to FIG. 8 may be applicable to refrigerant state detection for any air conditioning system.

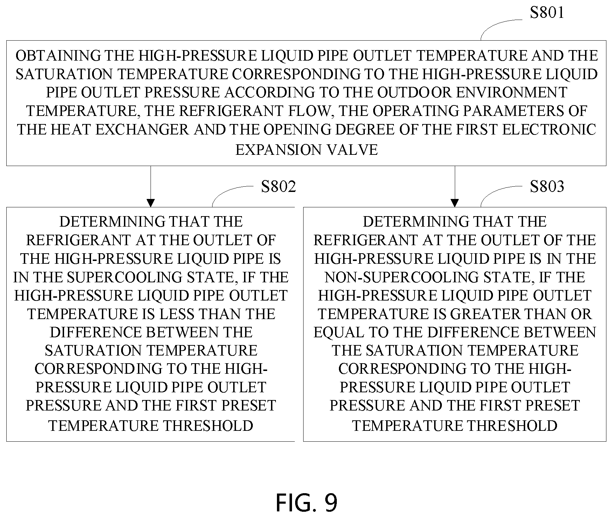

As shown in FIG. 9, in one embodiment, the air conditioning system does not include an economizer, and step S503 further includes the following step S803:

At step S803, if the high-pressure liquid pipe outlet temperature is greater than or equal to the difference between the saturation temperature corresponding to the high-pressure liquid pipe outlet pressure and the first preset temperature threshold, then determine that the refrigerant at the outlet of the high-pressure liquid pipe is in a non-supercooling state.

The method for detecting a refrigerant state provided in the embodiments corresponding to FIG. 9 may be applicable to refrigerant state detection for an air conditioning system that does not include an economizer.

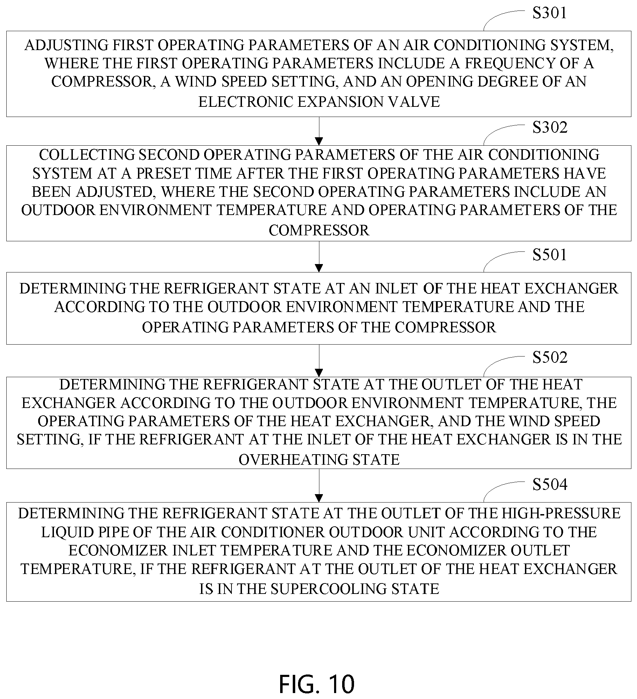

As shown in FIG. 10, in one embodiment comprising additional features and method steps beyond the ones defined by appended independent claim 1, the air conditioning system includes an economizer, and step S303 further includes the following step S504:

At step S504, if the refrigerant at the outlet of the heat exchanger is in the supercooling state, then determine the refrigerant state at the outlet of the high-pressure liquid pipe of the air conditioner outdoor unit according to the economizer inlet temperature and the economizer outlet temperature.

In practice, if the refrigerant at the outlet of the heat exchanger is in the supercooling state, then it is possible to further determine the refrigerant state at the outlet of the high-pressure liquid pipe according to the economizer inlet temperature and the economizer outlet temperature.

In one embodiment, step S504 includes the following steps:

if a difference between the economizer outlet temperature and the economizer inlet temperature is less than a second preset temperature threshold, then determining that the refrigerant at the outlet of the high-pressure liquid pipe of the air conditioner outdoor unit is in a supercooling state;

if the difference between the economizer outlet temperature and the economizer inlet temperature is greater than or equal to the second preset temperature threshold, then determining that the refrigerant at the outlet of the high-pressure liquid pipe of the air conditioner outdoor unit is in a non-supercooling state.

In practice, after the economizer outlet temperature and the economizer inlet temperature have been collected, it is possible to compare the difference between the economizer outlet temperature and the economizer inlet temperature with the second preset temperature threshold, and then determine the refrigerant state at the outlet of the high-pressure liquid pipe according to the comparison result. The second preset temperature threshold may be customized by the user according to actual needs or use a value from the factory default settings, for example, any value between 1°C and 5°C.

The method for detecting a refrigerant state provided in the embodiments corresponding to FIG. 10 may be applicable to refrigerant state detection for an air conditioning system including an economizer.

The embodiments of this disclosure adjusts the frequency of the compressor, the wind speed setting and the opening degree of the electronic expansion valve of the air conditioning system, and collects the outdoor environment temperature and the operating parameter of the air conditioning system such as the frequency, the exhaust pressure, the return gas pressure, the return gas temperature and the exhaust temperature of the compressor, and the wind speed setting and the opening degree of the first electronic expansion valve of the outdoor unit, after the system operates stably, thereby the embodiments of the disclosure may accurately obtain the refrigerant state of the air conditioning system according to the operating parameter of the air conditioning system, and improve the safety and reliability of the air conditioning system during use.

It should be understood that the reference number of the steps in the above-mentioned embodiments does not define the execution sequence of each process, which should be determined by the function and internal logic thereof, and should not constitute any limitation on the implementation process of the embodiments of this disclosure.

The embodiments of the present disclosure further provides a refrigerant state detection apparatus applicable to an air conditioning system, and the refrigerant state detection device is used for executing the method steps in the above method for detecting a refrigerant state embodiments. The refrigerant state detection apparatus may be a virtual appliance in the air conditioning system operated by a processor of the air conditioning system, or may be the air conditioning system itself.

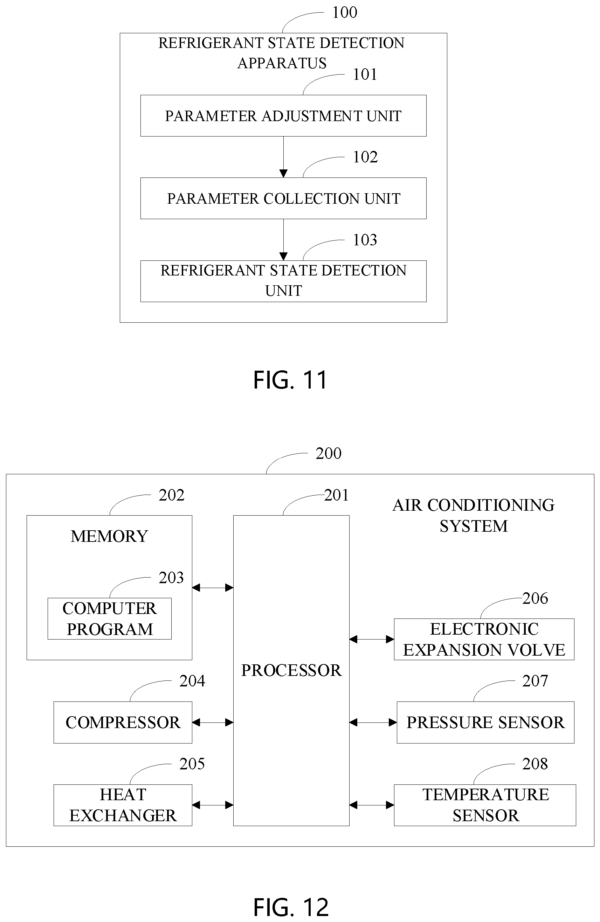

As shown in FIG. 11, the refrigerant state detection apparatus 100 according to the present invention and as defined by appended independent claim 9, includes:

a parameter adjustment unit 101 for adjusting first operating parameters of the air conditioning system, where the first operating parameters include a frequency of a compressor, a wind speed setting, and an opening degree of an electronic expansion valve of an air conditioner outdoor unit;

a parameter collection unit 102 for collecting second operating parameters of the air conditioning system after the adjustment of the first operating parameters has been completed for a preset duration, where the second operating parameters include an outdoor environment temperature and an operating parameter of the compressor;

a refrigerant state detection unit 103 for determining a refrigerant state of the air conditioning system according to the second operating parameters, as defined in appended independent claim 1.

In one embodiment, the parameter adjustment unit includes:

an instruction receiving subunit for entering a refrigerant state detection mode in respond to receiving of a power-on instruction or a refrigerant state detection instruction;

a parameter adjustment subunit for adjusting, in the refrigerant state detection mode, the frequency of the compressor to be a preset frequency, adjusting the wind speed setting of the air conditioner outdoor unit to be a preset wind speed setting, and adjust the opening degree of the electronic expansion valve of the air conditioner outdoor unit to be a preset opening degree.

In one embodiment, the refrigerant state detection unit includes:

a refrigerant state detection subunit for determining a refrigerant state at an inlet of a heat exchanger according to the outdoor environment temperature and the operating parameter of the compressor;

a first determining subunit for determining a refrigerant state at an outlet of the heat exchanger according to the outdoor environment temperature, the operating parameter of the heat exchanger and the wind speed setting, if the refrigerant at the inlet of the heat exchanger is in an overheating state;

a second determining subunit for determining a refrigerant state at an outlet of a high-pressure liquid pipe according to the outdoor environment temperature, the operating parameter of the heat exchanger and the opening degree of the electronic expansion valve, if the refrigerant at the outlet of the heat exchanger is in a supercooling state; or a third determining subunit for determining the refrigerant state at the outlet of the high-pressure liquid pipe of the air conditioner outdoor unit according to the economizer inlet temperature and the economizer outlet temperature if the refrigerant at the outlet of the heat exchanger is in the supercooling state.

In practice, each unit in the refrigerant state detection apparatus may be a software program unit, or may be implemented by means of different logic circuits integrated in the processor, or may be implemented by means of a plurality of distributed processors. A temperature obtaining unit may include a temperature sensor.

As shown in FIG. 12, an air conditioning system 200 is shown, which includes: at least one processor 201 (only one processor is shown in FIG. 12), a memory 202, and a computer program 203 stored in the memory 202 and executable on the at least one processor 201, and further includes a compressor 204, a heat exchanger 205, an electronic expansion valve 206, a pressure sensor 207 and a temperature sensor 208 connected to the at least one processor 201. When executing the computer program 203, the processor 201 implements the steps in each of the above-mentioned embodiments of the method for detecting a refrigerant state.

In practice, the air conditioning system may include, but is not limited to, a processor, a memory, a compressor, a heat exchanger, an electronic expansion valve, a pressure sensor, and a temperature sensor, and may further include an oil separator, a four-way valve, a gas-liquid separator, an economizer, an evaporator, pipelines connecting the components, and the like. Those skilled in the art may understand that FIG. 12 is merely an example of the air conditioning system, and does not constitute a limitation on the air conditioning system, which may more or fewer components than those shown in the figure, or a combination of some components or different components. For example, it may further include an input/output device, a network access device, and the like.

In practice, the processor may be a Central Processing Unit (CPU), or be other general purpose processor, a Digital Signal Processor (DSP), an Application Specific Integrated Circuit (ASIC), a Field-Programmable Gate Array (FPGA), or be other programmable logic device, discrete gate or transistor logic device, discrete hardware component, and etc. The general purpose processor may be a microprocessor, or the processor may also be any conventional processor.

In practice, the storage may be an internal storage unit of the air conditioning system in some embodiments, for example, a hard disk or a memory of the air conditioning system. The air conditioning system may also be an external storage device of the air conditioning system in some other embodiments, for example, a plug-in hard disk, a Smart Media Card (SMC), a Secure Digital (SD) card, a Flash Card, and the like, which is provided on the air conditioning system. Further, the storage may include both the internal storage unit and the external storage device, of the air conditioning system. The storage is configured to store an operating system, application programs, a Boot Loader, data and other programs such as a program code of a computer program. The storage may also be used to temporarily store data that has been or will be output.

It should be noted that content such as the execution processes and the information interactions between the devices/units described above are of the same concept as the method embodiments of the present disclosure, therefore reference may be made to the method embodiments for the specific functions and technical effects brought about. The details are not described herein again.

Those skilled in the art may clearly understand that, for the convenience and simplicity of description, the division of the above-mentioned functional units or modules is merely an example for illustration. In actual applications, the above-mentioned functions may be allocated to be performed by different functional units according to requirements, that is, the internal structure of the device may be divided into different functional units to complete all or part of the above-mentioned functions. The functional units in the embodiments may be integrated in one processing unit, or each unit may exist alone physically, or two or more units may be integrated in one unit. The above-mentioned integrated unit may be implemented in the form of hardware or in the form of software functional unit. In addition, the specific name of each functional unit is merely for the convenience of distinguishing each other and are not intended to limit the scope of protection of the present disclosure. For the specific operation processes of the units or modules in the above-mentioned system, reference may be made to the corresponding processes in the above-mentioned method embodiments. And the details will not be repeated here.

The embodiments of the present invention further provide a computer-readable storage medium storing a computer program, which, when executed by a processor, implements the steps in each of the foregoing embodiments of the method for detecting a refrigerant state.

The embodiments of the present disclosure provide a computer program product, which, when running on an air conditioning system, enables the air conditioning system to implement the steps in each of the foregoing embodiments of the method for detecting a refrigerant state.

When the integrated unit is implemented in the form of a software functional unit and is sold or used as an independent product, the integrated unit may be stored in a computer-readable storage medium. Based on this understanding, all or part of the processes of the method for implementing the above-mentioned embodiments of the present disclosure may also be implemented by instructing relevant hardware through a computer program. The computer program may be stored in a computer-readable storage medium, which may implement the steps of each of the above-mentioned method embodiments when executed by a processor. Wherein, the computer program includes computer program codes which may be in the form of source codes, object codes, executable files, or certain intermediate and the like. The computer-readable medium may include at least any primitive or device capable of carrying the computer program codes into the air conditioning system, a recording medium, computer memory, a Read-Only Memory (ROM), a Random Access Memory (RAM), electric carrier signals, telecommunication signals and software distribution media. For example, a USB flash drive, a portable hard disk, a magnetic disk, or an optical disk, and the like.

In the above embodiments, the description on each embodiment has its own emphasis, and for the part that are not described in detail or specified in some embodiments, one may refer to a related description on other embodiments.

Those skilled in the art may understand that the exemplary units and algorithm steps described in combination with the embodiments disclosed herein can be implemented with electronic hardware, or a combination of computer software and electronic hardware. Whether the functions are performed by hardware or software depends on the specific application and designed constraint conditions of the technical solutions. Those skilled in the art may use different methods to implement the described functions for each specific application, but this should not be considered as beyond the scope of the present disclosure.

It should be understood that the disclosed apparatus and method in the embodiments provided in the context of the invention may be implemented in other ways, as long as the implemented method comprises all steps defined by appended independent claim 1. For example, the apparatus embodiments described above are only illustrative. For example, the division of the units is only a logic functional division, and other division is possible in practical implementation. For example, multiple units or components may be combined or integrated into another system, or some features may be omitted, or not implemented. In addition, the intercoupling or direct coupling or communication connection shown or discussed may be through some interfaces, and the indirect coupling or communication connection between devices or units may be in electrical, mechanical or in other forms.

The unit described as a separate component may or may not be physically separated, and the part displayed as a unit may or may not be a physical unit, that is, it may be located in one place, or may also be distributed on multiple network units. Part or all of the units may be selected according to actual needs to achieve the purpose of the solutions of the embodiments.

**Claims**

1. A method for detecting a refrigerant state, wherein the method comprises:

adjusting (S301) first operating parameters of an air conditioning system (200),
wherein the first operating parameters comprise a frequency of a compressor (10, 204), a wind speed setting, and an opening degree of an electronic expansion valve (43, 71, 206);
collecting (S302) second operating parameters of the air conditioning system (200) after the adjustment of the first operating parameters has been completed for a preset duration, wherein the second operating parameters comprise an outdoor environment temperature and an operating parameter of the compressor (10, 204); and
determining (S303) a refrigerant state of the air conditioning system (200) from the second operating parameters, wherein said determining (S303) the refrigerant state of the air conditioning system (200) from the second operating parameters comprises:

determining (S501) a refrigerant state at an inlet of a heat exchanger (40, 205) from the outdoor environment temperature and the operating parameters of the compressor (10, 204), and
wherein said determining (S501) a refrigerant state at an inlet of a heat exchanger (40, 205) from the outdoor environment temperature and the operating parameters of the compressor (10, 204) comprises:

obtaining (S601) a heat exchanger inlet temperature and a saturation temperature corresponding to a heat exchanger inlet pressure from the outdoor environment temperature and the operating parameters of the compressor (10, 204);
determining (S602) that the refrigerant at the inlet of the heat exchanger (40, 205) is in an overheating state in case the heat exchanger inlet temperature is greater than a sum of the saturation temperature corresponding to the heat exchanger inlet pressure and a first preset temperature threshold; and
determining (S603) that the refrigerant at the inlet of the heat exchanger (40, 205) is in a non-overheating state and adjusting the first operating parameters in case the heat exchanger inlet temperature is less than or equal to the sum of the saturation temperature corresponding to the heat exchanger inlet pressure and the first preset temperature threshold,
wherein said obtaining (S601) a heat exchanger inlet temperature and a saturation temperature corresponding to a heat exchanger inlet pressure from the outdoor environment temperature and the operating parameter of the compressor (10, 204) comprises:

obtaining a refrigerant flow rate from the frequency, an exhaust pressure, a return gas pressure and a return gas temperature of the compressor (10, 204);
obtaining a pressure drop of an exhaust pipeline of the compressor (10, 204) from an exhaust temperature and the exhaust pressure of the compressor (10, 204) and the refrigerant flow rate;
obtaining a heat leakage of the exhaust pipeline of the compressor (10, 204) from the outdoor environment temperature, the exhaust temperature of the compressor (10, 204), and the refrigerant flow rate;
obtaining the heat exchanger inlet pressure from the exhaust pressure of the compressor (10, 204) and the pressure drop of the exhaust pipeline;
obtaining the heat exchanger inlet temperature from the exhaust temperature of the compressor (10, 204), the refrigerant flow rate, and the heat leakage of the exhaust pipeline; and
obtaining the saturation temperature corresponding to the heat exchanger inlet pressure from the heat exchanger inlet pressure.

2. The method for detecting a refrigerant state according to claim 1, wherein the second operating parameters further comprise the wind speed setting;
said determining (S303) the refrigerant state of the air conditioning system from the second operating parameters further comprises:
determining (S502) a refrigerant state at an outlet of the heat exchanger (40, 205) from the outdoor environment temperature, the refrigerant flow rate, the operating parameter of the heat exchanger (40, 205) and the wind speed setting in case the refrigerant at the inlet of the heat exchanger (40, 205) is in an overheating state.

3. The method for detecting a refrigerant state according to claim 2, wherein said determining (S502) the refrigerant state at an outlet of the heat exchanger (40, 205) from the outdoor environment temperature, the refrigerant flow rate, the operating parameter of the heat exchanger (40, 205) and the wind speed setting comprises:

obtaining (S701) a heat exchanger outlet temperature and a saturation temperature corresponding to a heat exchanger outlet pressure from the outdoor environment temperature, the refrigerant flow rate, the operating parameter of the heat exchanger (40, 205) and the wind speed setting;

determining (S702) that the refrigerant at the outlet of the heat exchanger (40, 205) is in a supercooling state in case the heat exchanger outlet temperature is less than a difference between the saturation temperature corresponding to the heat exchanger outlet pressure and the first preset temperature threshold; and

determining (S703) that the refrigerant at the outlet of the heat exchanger (40, 205) is in a non-supercooling state and adjusting the first operating parameters of the air conditioning system (200) in case the heat exchanger outlet temperature is greater than or equal to the difference between the saturation temperature corresponding to the heat exchanger outlet pressure and the first preset temperature threshold.

4. The method for detecting a refrigerant state according to claim 3, wherein said obtaining (S701) the heat exchanger outlet temperature and the saturation temperature corresponding to the heat exchanger outlet pressure from the outdoor environment temperature, the refrigerant flow rate, the operating parameter of the heat exchanger (40, 205) and the wind speed setting comprises:

obtaining a refrigerant pressure drop of the heat exchanger (40, 205) from the wind speed setting and the refrigerant flow rate;

obtaining a heat exchange of the heat exchanger (40, 205) from the outdoor environment temperature, the wind speed setting, the refrigerant flow rate, the heat exchanger inlet pressure and the heat exchanger inlet temperature;

obtaining the heat exchanger outlet pressure from the heat exchanger inlet pressure and the refrigerant pressure drop of the heat exchanger (40, 205);

obtaining the heat exchanger outlet temperature from the refrigerant flow rate, the heat exchange inlet temperature, the heat exchange of the heat exchange (40, 205) and the saturation temperature corresponding to the heat exchanger inlet pressure; and

obtaining the saturation temperature corresponding to the heat exchanger outlet pressure from the heat exchanger outlet pressure.

5. The method for detecting a refrigerant state according to claim 4, wherein the second operating parameters further comprise an opening degree of a first electronic expansion valve (43);

said determining (S303) the refrigerant state of the air conditioning system from the second operating parameters further comprises:

determining (S503) a refrigerant state at an outlet of a high-pressure liquid pipe from the outdoor environment temperature, the operating parameter of the heat exchanger (40, 205) and the opening degree of the first electronic expansion valve (43) in case the refrigerant at the outlet of the heat exchanger (40, 205) is in the supercooling state.

6. The method for detecting a refrigerant state according to claim 5, wherein said determining (S503) a refrigerant state at an outlet of a high-pressure liquid pipe from the outdoor environment temperature, the operating parameter of the heat exchanger (40, 205) and the opening degree of the first electronic expansion valve (43) comprises:

obtaining (S801) a high-pressure liquid pipe outlet temperature and a saturation temperature corresponding to a high-pressure liquid pipe outlet pressure from the outdoor environment temperature, the refrigerant flow rate, the operating parameter of the heat exchanger (40, 205) and the opening degree of the first electronic expansion valve (43);

determining (S802) that the refrigerant at the outlet of the high-pressure liquid pipe is in the supercooling state in case the high-pressure liquid pipe outlet temperature is less than a difference between the saturation temperature corresponding to the high-pressure liquid pipe outlet pressure and the first preset temperature threshold; and

determining (S803) that the refrigerant at the outlet of the high-pressure liquid pipe is in a non-supercooling state in case the high-pressure liquid pipe outlet temperature is greater than or equal to the difference between the saturation temperature corresponding to the high-pressure liquid pipe outlet pressure and the first preset temperature threshold.

7. An apparatus (100) for detecting a refrigerant state, wherein the apparatus comprises:

a parameter adjustment unit (101) for adjusting first operating parameters of an air conditioning system (200); wherein the first operating parameters comprise a frequency of a compressor (10, 204), a wind speed setting, and an opening degree of an electronic expansion valve (43, 71, 206) of an air conditioner outdoor unit;

a parameter collection unit (102) for collecting second operating parameters of the air conditioning system (200) after the adjustment of the first operating parameters has been completed for a preset duration; wherein the second operating parameters comprise an outdoor environment temperature and an operating parameter of the compressor (10, 204); and

a refrigerant state detection unit (103) for determining a refrigerant state of the air conditioning system (200) from the second operating parameters according to the method of one of claims 1 to 6.

8.  A computer-readable medium containing instructions of a computer program (203), which, when executed on a processor (201) forming part of an air-conditioning system (200), perform the method for

detecting a refrigerant state according to any one of claims 1-6.

**Patentansprüche**

1.  Verfahren zum Erfassen eines Kältemittelzustands, wobei das Verfahren Folgendes umfasst:

Anpassen (S301) erster Betriebsparameter eines Klimatisierungssystems (200), wobei die ersten Betriebsparameter eine Frequenz eines Kompressors (10, 204), eine Windgeschwindigkeitseinstellung und einen Öffnungsgrad eines elektronischen Expansionsventils (43, 71, 206) umfassen;

Sammeln (S302) von zweiten Betriebsparametern des Klimatisierungssystems (200), nachdem das Anpassen der ersten Betriebsparameter für eine voreingestellte Dauer abgeschlossen wurde, wobei die zweiten Betriebsparameter eine Außenumgebungstemperatur und einen Betriebsparameter des Kompressors (10, 204) umfassen; und

Bestimmen (S303) eines Kältemittelzustands des Klimatisierungssystems (200) anhand der zweiten Betriebsparameter,

wobei das Bestimmen (S303) des Kältemittelzustands des Klimatisierungssystems (200) anhand der zweiten Betriebsparameter Folgendes umfasst:

Bestimmen (S501) eines Kältemittelzustands an einem Einlass eines Wärmetauschers (40, 205) anhand der Außenumgebungstemperatur und der Betriebsparameter des Kompressors (10, 204), und

wobei das Bestimmen (S501) eines Kältemittelzustands an einem Einlass eines Wärmetauschers (40, 205) anhand der Außenumgebungstemperatur und der Betriebsparameter des Kompressors (10, 204) Folgendes umfasst:

Erhalten (S601) einer Wärmetauscher-Einlasstemperatur und einer einem Wärmetauscher-Einlassdruck entsprechenden Sättigungstemperatur anhand der Außenumgebungstemperatur und der Betriebsparameter des Kompressors (10, 204);

Bestimmen (S602), dass sich das Kältemittel am Einlass des Wärmetauschers (40, 205) in einem Überhitzungszustand befindet, falls die Wärmetauscher-Einlasstemperatur größer als eine Summe aus der dem Wärmetauscher-Einlassdruck entsprechenden Sättigungstemperatur und einem ersten voreingestellten Temperaturschwellenwert ist; und

Bestimmen (S603), dass sich das Kältemittel am Einlass des Wärmetauschers (40, 205) in einem nicht überhitzten Zustand befindet, und Anpassen der ersten Betriebsparameter, falls die Einlasstemperatur des Wärmetauschers kleiner oder gleich der Summe aus der dem Wärmetauscher-Einlassdruck entsprechenden Sättigungstemperatur und dem ersten voreingestellten Temperaturschwellenwert ist,

wobei das Erhalten (S601) einer Wärmetauscher-Einlasstemperatur und einer dem Wärmetauscher-Einlassdruck entsprechenden Sättigungstemperatur anhand der Außenumgebungstemperatur und des Betriebsparameters des Kompressors (10, 204) Folgendes umfasst:

Erhalten einer Kältemitteldurchflussrate anhand der Frequenz, eines Auslassdrucks, eines Rückgasdrucks und einer Rückgastemperatur des Kompressors (10, 204);

Erhalten eines Druckabfalls einer Auslassleitung des Kompressors (10, 204) anhand einer Auslasstemperatur und des Auslassdrucks des Kompressors (10, 204) und der Kältemitteldurchflussrate;

Erhalten einer Wärmeabgabe der Auslassleitung des Kompressors (10, 204) anhand der Außenumgebungstemperatur, der Auslasstemperatur des Kompressors (10, 204) und der Kältemitteldurchflussrate;

Erhalten des Wärmetauscher-Einlassdrucks anhand des Auslassdrucks des Kompressors (10, 204) und des Druckabfalls der Auslassleitung;

Erhalten der Wärmetauscher-Einlasstemperatur anhand der Auslasstemperatur des Kompressors (10, 204), der Kältemitteldurchflussrate und der Wärmeabgabe der Auslassleitung; und

Erhalten der dem Wärmetauscher-Einlassdruck entsprechenden Sättigungstemperatur anhand des Wärmetauscher-Einlassdrucks.

2. Verfahren zum Erfassen eines Kältemittelzustands gemäß Anspruch 1, wobei die zweiten Betriebsparameter ferner die Windgeschwindigkeitseinstellung umfassen;

das Bestimmen (S303) des Kältemittelzustands des Klimatisierungssystems anhand der zweiten Betriebsparameter ferner Folgendes umfasst:

Bestimmen (S502) eines Kältemittelzustands an einem Auslass des Wärmetauschers (40, 205) anhand der Außenumgebungstemperatur, der Kältemitteldurchflussrate, des Betriebsparameters des Wärmetauschers (40, 205) und der Windgeschwindigkeitseinstellung, falls sich das Kältemittel am Einlass des Wärmetauschers (40, 205) in einem Überhitzungszustand befindet.

3. Verfahren zum Erfassen eines Kältemittelzustands gemäß Anspruch 2, wobei das Bestimmen (S502) des Kältemittelzustands an einem Auslass des Wärmetauschers (40, 205) anhand der Außenumgebungstemperatur, der Kältemitteldurchflussrate, des Betriebsparameters des Wärmetauschers (40, 205) und der Windgeschwindigkeitseinstellung Folgendes umfasst:

Erhalten (S701) einer Wärmetauscher-Auslasstemperatur und einer einem Wärmetauscher-Auslassdruck entsprechenden Sättigungstemperatur anhand der Außenumgebungstemperatur, der Kältemitteldurchflussrate, des Betriebsparameters des Wärmetauschers (40, 205) und der Windgeschwindigkeitseinstellung;

Bestimmen (S702), dass sich das Kältemittel am Auslass des Wärmetauschers (40, 205) in einem Unterkühlungszustand befindet, falls die Wärmetauscher-Auslasstemperatur geringer ist als eine Differenz zwischen der einem Wärmetauscher-Auslassdruck entsprechenden Sättigungstemperatur und dem ersten voreingestellten Temperaturschwellenwert; und

Bestimmen (S703), dass sich das Kältemittel am Auslass des Wärmetauschers (40, 205) in einem nicht unterkühlten Zustand befindet, und Anpassen der ersten Betriebsparameter des Klimatisierungssystems (200), falls die Wärmetauscher-Auslasstemperatur größer oder gleich der Differenz zwischen der dem Wärmetauscher-Auslassdruck entsprechenden Sättigungstemperatur und dem ersten voreingestellten Temperaturschwellenwert ist.

4. Verfahren zum Erfassen eines Kältemittelzustands gemäß Anspruch 3, wobei das Erhalten (S701) der Wärmetauscher-Auslasstemperatur und der dem Wärmetauscher-Auslassdruck entsprechenden Sättigungstemperatur anhand der Außenumgebungstemperatur, der Kältemitteldurchflussrate, des Betriebsparameters des Wärmetauschers (40, 205) und der Windgeschwindigkeitseinstellung Folgendes umfasst:

Erhalten eines Kältemitteldruckabfalls des Wärmetauschers (40, 205) anhand der Windgeschwindigkeitseinstellung und der Kältemitteldurchflussrate;

Erhalten eines Wärmeaustauschs des Wärmetauschers (40, 205) anhand der Außenumgebungstemperatur, der Windgeschwindigkeitseinstellung, der Kältemitteldurchflussrate, des Wärmetauscher-Eingangsdrucks und der Wärmetauscher-Einlasstemperatur;

Erhalten des Wärmetauscher-Auslassdrucks anhand des Wärmetauscher-Eingangsdrucks und des Kältemitteldruckabfalls des Wärmetauschers (40, 205);

Erhalten der Wärmetauscher-Auslasstemperatur anhand der Kältemitteldurchflussrate, der Wärmetauscher-Einlasstemperatur, des Wärmeaustauschs des Wärmetauschers (40, 205) und der dem Wärmetauscher-Einlassdruck entsprechenden Sättigungstemperatur; und

Erhalten der dem Wärmetauscher-Auslassdruck entsprechenden Sättigungstemperatur anhand des Wärmetauscher-Auslassdrucks.

5. Verfahren zum Erfassen eines Kältemittelzustands gemäß Anspruch 4, wobei die zweiten Betriebsparameter ferner einen Öffnungsgrad eines ersten elektronischen Expansionsventils (43) umfassen;

wobei das Bestimmen (S303) des Kältemittelzustands des Klimatisierungssystems anhand der zweiten Betriebsparameter ferner Folgendes umfasst:

Bestimmen (S503) eines Kältemittelzustands an einem Auslass einer Hochdruck-Flüssigkeitsleitung anhand der Außenumgebungstemperatur, des Betriebsparameters des Wärmetauschers (40, 205) und des Öffnungsgrads des ersten elektronischen Expansionsventils (43), falls sich das Kältemittel am Auslass des Wärmetauschers (40, 205) im Unterkühlungszustand befindet.

6. Verfahren zum Erfassen eines Kältemittelzustands gemäß Anspruch 5, wobei das Bestimmen (S503) eines Kältemittelzustands an einem Auslass einer Hochdruckflüssigkeitsleitung anhand der Außenumgebungstemperatur, des Betriebsparameters des Wärmetauschers (40, 205) und des Öffnungsgrads des ersten elektronischen Expansionsventils (43) Folgendes umfasst:

Erhalten (S801) einer Hochdruck-Flüssigkeitsleitungs-Auslasstemperatur und einer einem Hochdruck-Flüssigkeitsleitungs-Ausgangsdruck entsprechenden Sättigungstemperatur anhand der Außenumgebungstemperatur, der Kältemitteldurchflussrate, des Betriebsparameters des Wärmetauschers (40, 205) und des Öffnungsgrads des ersten elektronischen Expansionsventils (43);

Bestimmen (S802), dass sich das Kältemittel am Auslass der Hochdruck-Flüssigkeitsleitung im Unterkühlungszustand befindet, falls die Hochdruck-Flüssigkeitsleitungs-Auslasstemperatur kleiner ist als die Differenz zwischen der dem Hochdruck-Flüssigkeitsleitungs-Auslassdruck entsprechenden Sättigungstemperatur und dem ersten voreingestellten Temperaturschwellenwert; und

Bestimmen (S803), dass sich das Kältemittel am Auslass der Hochdruck-Flüssigkeitsleitung nicht in einem Unterkühlungszustand befindet, falls die Hochdruck-Flüssigkeitsleitungs-Auslasstemperatur größer oder gleich der Differenz zwischen der dem Hochdruck-Flüssigkeitsleitungs-Auslassdruck entsprechenden Sättigungstemperatur und dem ersten voreingestellten Temperaturschwellenwert ist.

7. Gerät (100) zum Erfassen eines Kältemittelzustands, wobei das Gerät Folgendes umfasst:

eine Parameteranpassungseinheit (101) zum Anpassen erster Betriebsparameter eines Klimatisierungssystems (200); wobei die ersten Betriebsparameter eine Frequenz eines Kompressors (10, 204), eine Windgeschwindigkeitseinstellung und einen Öffnungsgrad eines elektronischen Expansionsventils (43, 71, 206) einer Klimaanlagen-Außeneinheit umfassen;

eine Parametersammeleinheit (102) zum Sammeln zweiter Betriebsparameter des Klimatisierungssystems (200), nachdem das Anpassen der ersten Betriebsparameter für eine voreingestellte Dauer abgeschlossen ist; wobei die zweiten Betriebsparameter eine Außenumgebungstemperatur und einen Betriebsparameter des Kompressors (10, 204) umfassen; und

eine Kältemittelzustandserfassungseinheit (103) zum Bestimmen eines Kältemittelzustands des Klimatisierungssystems (200) anhand den zweiten Betriebsparameter gemäß dem Verfahren nach einem der Ansprüche 1 bis 6.

8. Computerlesbares Medium beinhaltend Anweisungen eines Computerprogramms (203), das, wenn es auf einem Prozessor (201) ausgeführt wird, der einen Teil eines Klimatisierungssystems (200) ausbildet, das Verfahren zum Erfassen eines Kältemittelzustands gemäß einem der Ansprüche 1 bis 6 ausführt.

**Revendications**

1. Procédé de détection d'un état d'un réfrigérant, dans lequel le procédé comprend :

ajuster (S301) les premiers paramètres de fonctionnement d'un système de climatisation (200), les premiers paramètres de fonctionnement comprenant une fréquence d'un compresseur (10, 204), un réglage de la vitesse du vent et un degré d'ouverture d'une vanne d'expansion électronique (43, 71, 206) ;

collecter (S302) des seconds paramètres de fonctionnement du système de climatisation (200) après l'ajustement des premiers paramètres de fonctionnement a été effectué pendant une durée prédéfinie, les seconds paramètres de fonctionnement comprenant une température ambiante extérieure et un paramètre de fonctionnement du compresseur (10, 204) ; et

déterminer (S303) un état de réfrigérant du système de climatisation (200) à partir des deuxièmes paramètres de fonctionnement,

dans lequel ladite détermination (S303) de l'état de réfrigérant du système de climatisation (200) à partir des seconds paramètres de fonctionnement comprend :

la détermination (S501) d'un état de réfrigérant à une entrée d'un échangeur de chaleur (40, 205) à partir de la température ambiante extérieure et des paramètres de fonctionnement du compresseur (10, 204), et

dans lequel ladite détermination (S501) d'un état de réfrigérant à une entrée d'un échangeur de chaleur (40, 205) à partir de la température ambiante extérieure et des paramètres de fonctionnement du compresseur (10, 204) comprend :

l'obtention (S601) d'une température d'entrée de l'échangeur de chaleur et d'une température de saturation correspondant à une pression d'entrée de l'échangeur de chaleur à partir de la température ambiante extérieure et des paramètres de fonctionnement du compresseur (10, 204) ;

déterminer (S602) que le réfrigérant à l'entrée de l'échangeur de chaleur (40, 205) est dans un état de surchauffe dans le cas où la température d'entrée de l'échangeur de chaleur est supérieure à une somme de la température de saturation correspondant à la pression d'entrée de l'échangeur de chaleur et d'un premier seuil de température prédéfini ; et

déterminer (S603) que le réfrigérant à l'entrée de l'échangeur de chaleur (40, 205) est dans un état de non-surchauffe et ajuster les premiers paramètres de fonctionnement dans le cas où la température d'entrée de l'échangeur de chaleur est inférieure ou égale à la somme de la température de saturation correspondant à la pression d'entrée de l'échangeur de chaleur et du premier seuil de température prédéfini,

dans lequel ladite obtention (S601) d'une température d'entrée de l'échangeur de chaleur et d'une température de saturation correspondant à une pression d'entrée de l'échangeur de chaleur à partir de la température ambiante extérieure et du paramètre de fonctionnement du compresseur (10, 204) comprend :

l'obtention d'un débit de réfrigérant à partir de la fréquence, d'une pression d'échappement, d'une pression de gaz de retour et d'une température de gaz de retour du compresseur (10, 204) ;

l'obtention d'une chute de pression d'une conduite d'échappement du compresseur (10, 204) à partir d'une température d'échappement et de la pression d'échappement du compresseur (10, 204) et du débit de réfrigérant ;

l'obtention d'une fuite de chaleur de la conduite d'échappement du compresseur (10, 204) à partir de la température ambiante extérieure, de la température d'échappement du compresseur (10, 204) et du débit de réfrigérant ;

obtenir la pression d'entrée de l'échangeur de chaleur à partir de la pression d'échappement du compresseur (10, 204) et de la chute de pression de la conduite d'échappement ;

obtenir la température d'entrée de l'échangeur de chaleur à partir de la température d'échappement du compresseur (10, 204), du débit de réfrigérant et de la fuite thermique de la conduite d'échappement ; et

obtenir la température de saturation correspondant à la pression d'entrée de l'échangeur de chaleur à partir de la pression d'entrée de l'échangeur de chaleur .

2.  Procédé de détection d'un état d'un réfrigérant selon la revendication 1, dans lequel les seconds paramètres de fonctionnement comprennent en outre le réglage de la vitesse du vent ;

ladite détermination (S303) de l'état d'un réfrigérant du système de climatisation à partir des seconds paramètres de fonctionnement comprend en outre :

la détermination (S502) d'un état du réfrigérant à la sortie de l'échangeur de chaleur (40, 205) à partir de la température ambiante extérieure, le débit du réfrigérant, le paramètre de fonctionnement de l'échangeur de chaleur (40, 205) et le réglage de la vitesse du vent dans le cas où le réfrigérant à l'entrée de l'échangeur de chaleur (40, 205) est dans un état de surchauffe.

3.  Procédé de détection d'un état d'un réfrigérant selon la revendication 2, dans lequel ladite détermination (S502) de l'état du réfrigérant à la sortie de l'échangeur de chaleur (40, 205) à partir de la température ambiante extérieure, du débit du réfrigérant, du paramètre de fonctionnement de l'échangeur de chaleur (40, 205) et du réglage de la vitesse du vent comprend :

l'obtention (S701) d'une température de sortie de l'échangeur de chaleur et d'une température de saturation correspondant à une pression de sortie de l'échangeur de chaleur à partir de la température ambiante extérieure, du débit de réfrigérant, du paramètre de fonctionnement de l'échangeur de chaleur (40, 205) et du réglage de la vitesse du vent ;

déterminer (S702) que le réfrigérant à la sortie de l'échangeur de chaleur (40, 205) est dans un état de surrefroidissement dans le cas où la température de sortie de l'échangeur de chaleur est inférieure à une différence entre la température de saturation correspondant à la pression de sortie de l'échangeur de chaleur et le premier seuil de température prédéfini ; et

déterminer (S703) que le réfrigérant à la sortie de l'échangeur de chaleur (40, 205) est dans un état de non-surrefroidissement et ajuster les premiers paramètres de fonctionnement du système de climatisation (200) dans le cas où la température de sortie de l'échangeur de chaleur est supérieure ou égale à la différence entre la température de saturation correspondant à la pression de sortie de l'échangeur de chaleur et le premier seuil de température prédéfini.

4. Procédé de détection d'un état d'un réfrigérant selon la revendication 3, dans lequel ladite obtention (S701) de la température de sortie de l'échangeur de chaleur et de la température de saturation correspondant à la pression de sortie de l'échangeur de chaleur à partir de la température ambiante extérieure, du débit de réfrigérant, du paramètre de fonctionnement de l'échangeur de chaleur (40, 205) et du réglage de la vitesse du vent comprend :

l'obtention d'une chute de pression du réfrigérant de l'échangeur de chaleur (40, 205) à partir du réglage de la vitesse du vent et du débit du réfrigérant ;

l'obtention d'un échange thermique de l'échangeur de chaleur (40, 205) à partir de la température ambiante extérieure, du réglage de la vitesse du vent, du débit de réfrigérant, de la pression d'entrée de l'échangeur de chaleur et de la température d'entrée de l'échangeur de chaleur ;

obtenir la pression de sortie de l'échangeur de chaleur à partir de la pression d'entrée de l'échangeur de chaleur et de la chute de pression du réfrigérant de l'échangeur de chaleur (40, 205) ;

obtenir la température de sortie de l'échangeur de chaleur à partir du débit de réfrigérant, de la température d'entrée de l'échange de chaleur, de l'échange de chaleur de l'échangeur de chaleur (40, 205) et de la température de saturation correspondant à la pression d'entrée de l'échangeur de chaleur ; et

obtenir la température de saturation correspondant à la pression de sortie de l'échangeur de chaleur à partir de la pression de sortie de l'échangeur de chaleur.

5. Procédé de détection d'un état d'un réfrigérant selon la revendication 4, dans lequel les seconds paramètres de fonctionnement comprennent en outre un degré d'ouverture d'une première vanne d'expansion électronique (43) ; ladite détermination (S303) de l'état du réfrigérant du système de climatisation à partir des seconds paramètres de fonctionnement comprend en outre :

la détermination (S503) d'un état du réfrigérant à une sortie d'un tuyau de liquide à haute pression à partir de la température ambiante extérieure, du paramètre de fonctionnement de l'échangeur de chaleur (40, 205) et du degré d'ouverture de la première vanne d'expansion électronique (43) dans le cas où le réfrigérant à la sortie de l'échangeur de chaleur (40, 205) est dans un état de surrefroidissement.

6. Procédé de détection d'un état d'un réfrigérant selon la revendication 5, dans lequel ladite détermination (S503) d'un état de réfrigérant à une sortie d'un tuyau de liquide à haute pression à partir de la température ambiante extérieure, du paramètre de fonctionnement de l'échangeur de chaleur (40, 205) et du degré d'ouverture de la première vanne d'expansion électronique (43) comprend :

l'obtention (S801) d'une température de sortie de la conduite de liquide à haute pression et d'une température de saturation correspondant à une pression de sortie de la conduite de liquide à haute pression à partir de la température ambiante extérieure, du débit de réfrigérant, du paramètre de fonctionnement de l'échangeur de chaleur (40, 205) et du degré d'ouverture de la première vanne d'expansion électronique (43) ;

déterminer (S802) que le réfrigérant à la sortie du tuyau de liquide à haute pression est dans un état de surrefroidissement dans le cas où la température de sortie du tuyau de liquide à haute pression est inférieure à une différence entre la température de saturation correspondant à la pression de sortie du tuyau de liquide à haute pression et le premier seuil de température prédéfini ; et

déterminer (S803) que le réfrigérant à la sortie du tuyau de liquide haute pression est dans un état de non-surrefroidissement dans le cas où la température de sortie du tuyau de liquide haute pression est supérieure ou égale à la différence entre la température de saturation correspondant à la pression de sortie du tuyau de liquide haute pression et le premier seuil de température prédéfini.

7. Appareil (100) pour détecter un état d'un réfrigérant, dans lequel l'appareil comprend :

une unité de réglage de paramètres (101) pour régler des premiers paramètres de fonctionnement d'un système de climatisation (200) ; dans lequel les premiers paramètres de fonctionnement comprennent une fréquence d'un compresseur (10, 204), un réglage de la vitesse du vent et un degré d'ouverture d'une vanne d'expansion électronique (43, 71, 206) d'une unité extérieure de climatisation ;

une unité de collecte de paramètres (102) pour collecter des seconds paramètres de fonctionnement du système de climatisation (200) après que le réglage des premiers paramètres de fonctionnement a été effectué pendant une durée prédéfinie ; les seconds paramètres de fonctionnement comprenant une température ambiante extérieure et un paramètre de fonctionnement du compresseur (10, 204) ; et

une unité de détection de l'état du réfrigérant (103) pour déterminer un état du réfrigérant du système de climatisation (200) à partir des seconds paramètres de fonctionnement selon le procédé de l'une des revendications 1 à 6.

8. Support lisible par ordinateur contenant des instructions d'un programme informatique (203) qui, lorsqu'elles sont exécutées sur un processeur (201) faisant partie d'un système de climatisation (200), mettent en œuvre le procédé de détection d'un état d'un réfrigérant selon l'une quelconque des revendications 1 à 6.

40   46   41,42   43   44,45   60

31,32

30

20

11,12

10   13,14

50

FIG. 1

FIG. 2

S301

ADJUSTING FIRST OPERATING PARAMETERS OF AN AIR CONDITIONING SYSTEM, WHERE THE FIRST OPERATING PARAMETERS INCLUDE A FREQUENCY OF A COMPRESSOR, A WIND SPEED SETTING, AND AN OPENING DEGREE OF AN ELECTRONIC EXPANSION VALVE

S302

COLLECTING SECOND OPERATING PARAMETERS OF THE AIR CONDITIONING SYSTEM AT A PRESET TIME AFTER THE FIRST OPERATING PARAMETERS HAVE BEEN ADJUSTED, WHERE THE SECOND OPERATING PARAMETERS INCLUDE AN OUTDOOR ENVIRONMENT TEMPERATURE AND OPERATING PARAMETERS OF THE COMPRESSOR

S303

DETERMINING A REFRIGERANT STATE OF THE AIR CONDITIONING SYSTEM ACCORDING TO THE SECOND OPERATING PARAMETERS

FIG. 3

S401

ENTERING THE REFRIGERANT STATE DETECTION MODE IN RESPONSE TO RECEIVING A POWER-ON INSTRUCTION OR A REFRIGERANT STATE DETECTION INSTRUCTION

S402

ADJUSTING THE FREQUENCY OF THE COMPRESSOR TO A PRESET FREQUENCY, ADJUSTING THE WIND SPEED SETTING OF THE AIR CONDITIONER OUTDOOR UNIT TO A PRESET WIND SPEED SETTING, AND ADJUSTING THE OPENING DEGREE OF THE ELECTRONIC EXPANSION VALVE OF THE AIR CONDITIONER OUTDOOR UNIT TO A PRESET OPENING DEGREE, IN THE REFRIGERANT STATE DETECTION MODE

S302

COLLECTING SECOND OPERATING PARAMETERS OF THE AIR CONDITIONING SYSTEM AT A PRESET TIME AFTER THE FIRST OPERATING PARAMETERS HAVE BEEN ADJUSTED, WHERE THE SECOND OPERATING PARAMETERS INCLUDE AN OUTDOOR ENVIRONMENT TEMPERATURE AND OPERATING PARAMETERS OF THE COMPRESSOR

S303

DETERMINING A REFRIGERANT STATE OF THE AIR CONDITIONING SYSTEM ACCORDING TO THE SECOND OPERATING PARAMETERS

FIG. 4

S301

ADJUSTING FIRST OPERATING PARAMETERS OF AN AIR CONDITIONING SYSTEM, WHERE THE FIRST OPERATING PARAMETERS INCLUDE A FREQUENCY OF A COMPRESSOR, A WIND SPEED SETTING, AND AN OPENING DEGREE OF AN ELECTRONIC EXPANSION VALVE

S302

COLLECTING SECOND OPERATING PARAMETERS OF THE AIR CONDITIONING SYSTEM AT A PRESET TIME AFTER THE FIRST OPERATING PARAMETERS HAVE BEEN ADJUSTED, WHERE THE SECOND OPERATING PARAMETERS INCLUDE AN OUTDOOR ENVIRONMENT TEMPERATURE AND OPERATING PARAMETERS OF THE COMPRESSOR

S501

DETERMINE THE REFRIGERANT STATE AT AN INLET OF THE HEAT EXCHANGER ACCORDING TO THE OUTDOOR ENVIRONMENT TEMPERATURE AND THE OPERATING PARAMETERS OF THE COMPRESSOR

S502

DETERMINING THE REFRIGERANT STATE AT THE OUTLET OF THE HEAT EXCHANGER ACCORDING TO THE OUTDOOR ENVIRONMENT TEMPERATURE, THE OPERATING PARAMETERS OF THE HEAT EXCHANGER, AND THE WIND SPEED SETTING, IF THE REFRIGERANT AT THE INLET OF THE HEAT EXCHANGER IS IN THE OVERHEATING STATE

S503

DETERMINING THE REFRIGERANT STATE AT THE OUTLET OF THE HIGH-PRESSURE LIQUID PIPE ACCORDING TO THE OUTDOOR ENVIRONMENT TEMPERATURE, THE OPERATING PARAMETERS OF THE HEAT EXCHANGER AND THE OPENING DEGREE OF THE FIRST ELECTRONIC EXPANSION VALVE, IF THE REFRIGERANT AT THE OUTLET OF THE HEAT EXCHANGER IS IN THE SUPERCOOLING STATE

FIG. 5

S601

OBTAINING THE HEAT EXCHANGER INLET TEMPERATURE AND THE SATURATION TEMPERATURE CORRESPONDING TO THE HEAT EXCHANGER INLET PRESSURE ACCORDING TO THE OUTDOOR ENVIRONMENT TEMPERATURE AND THE OPERATING PARAMETERS OF THE COMPRESSOR

S602

DETERMINING THAT THE REFRIGERANT AT THE INLET OF THE HEAT EXCHANGER IS IN THE OVERHEATING STATE, IF THE HEAT EXCHANGER INLET TEMPERATURE IS GREATER THAN THE SUM OF THE SATURATION TEMPERATURE CORRESPONDING TO THE HEAT EXCHANGER INLET PRESSURE AND A FIRST PRESET TEMPERATURE THRESHOLD

S603

DETERMINING THAT THE REFRIGERANT AT THE INLET OF THE HEAT EXCHANGER IS IN THE NON-OVERHEATING STATE AND ADJUSTING THE FIRST OPERATING PARAMETERS, IF THE HEAT EXCHANGER INLET TEMPERATURE IS LESS THAN OR EQUAL TO THE SUM OF THE SATURATION TEMPERATURE CORRESPONDING TO THE HEAT EXCHANGER INLET PRESSURE AND THE FIRST PRESET TEMPERATURE THRESHOLD

FIG. 6

S701

OBTAINING THE HEAT EXCHANGER OUTLET TEMPERATURE AND THE SATURATION TEMPERATURE CORRESPONDING TO THE HEAT EXCHANGER OUTLET PRESSURE ACCORDING TO THE OUTDOOR ENVIRONMENT TEMPERATURE, THE REFRIGERANT FLOW, THE OPERATING PARAMETERS OF THE HEAT EXCHANGER AND THE WIND SPEED SETTING

S702

DETERMINING THAT THE REFRIGERANT AT THE OUTLET OF THE HEAT EXCHANGER IS IN THE SUPERCOOLING STATE, IF THE HEAT EXCHANGER OUTLET TEMPERATURE IS LESS THAN THE DIFFERENCE BETWEEN THE SATURATION TEMPERATURE CORRESPONDING TO THE HEAT EXCHANGER OUTLET PRESSURE AND THE FIRST PRESET TEMPERATURE THRESHOLD

S703

DETERMINING THAT THE REFRIGERANT AT THE OUTLET OF THE HEAT EXCHANGER IS IN THE NON-SUPERCOOLING STATE AND ADJUSTING THE FIRST OPERATING PARAMETERS OF THE AIR CONDITIONING SYSTEM, IF THE HEAT EXCHANGER OUTLET TEMPERATURE IS GREATER THAN OR EQUAL TO THE DIFFERENCE BETWEEN THE SATURATION TEMPERATURE CORRESPONDING TO THE HEAT EXCHANGER OUTLET PRESSURE AND THE FIRST PRESET TEMPERATURE THRESHOLD

FIG. 7

S801

OBTAINING THE HIGH-PRESSURE LIQUID PIPE OUTLET TEMPERATURE AND THE SATURATION TEMPERATURE CORRESPONDING TO THE HIGH-PRESSURE LIQUID PIPE OUTLET PRESSURE ACCORDING TO THE OUTDOOR ENVIRONMENT TEMPERATURE, THE REFRIGERANT FLOW, THE OPERATING PARAMETERS OF THE HEAT EXCHANGER AND THE OPENING DEGREE OF THE FIRST ELECTRONIC EXPANSION VALVE

S802

DETERMINING THAT THE REFRIGERANT AT THE OUTLET OF THE HIGH-PRESSURE LIQUID PIPE IS IN THE SUPERCOOLING STATE, IF THE HIGH-PRESSURE LIQUID PIPE OUTLET TEMPERATURE IS LESS THAN THE DIFFERENCE BETWEEN THE SATURATION TEMPERATURE CORRESPONDING TO THE HIGH-PRESSURE LIQUID PIPE OUTLET PRESSURE AND THE FIRST PRESET TEMPERATURE THRESHOLD

FIG. 8

S801

OBTAINING THE HIGH-PRESSURE LIQUID PIPE OUTLET TEMPERATURE AND THE SATURATION TEMPERATURE CORRESPONDING TO THE HIGH-PRESSURE LIQUID PIPE OUTLET PRESSURE ACCORDING TO THE OUTDOOR ENVIRONMENT TEMPERATURE, THE REFRIGERANT FLOW, THE OPERATING PARAMETERS OF THE HEAT EXCHANGER AND THE OPENING DEGREE OF THE FIRST ELECTRONIC EXPANSION VALVE

S802

DETERMINING THAT THE REFRIGERANT AT THE OUTLET OF THE HIGH-PRESSURE LIQUID PIPE IS IN THE SUPERCOOLING STATE, IF THE HIGH-PRESSURE LIQUID PIPE OUTLET TEMPERATURE IS LESS THAN THE DIFFERENCE BETWEEN THE SATURATION TEMPERATURE CORRESPONDING TO THE HIGH-PRESSURE LIQUID PIPE OUTLET PRESSURE AND THE FIRST PRESET TEMPERATURE THRESHOLD

S803

DETERMINING THAT THE REFRIGERANT AT THE OUTLET OF THE HIGH-PRESSURE LIQUID PIPE IS IN THE NON-SUPERCOOLING STATE, IF THE HIGH-PRESSURE LIQUID PIPE OUTLET TEMPERATURE IS GREATER THAN OR EQUAL TO THE DIFFERENCE BETWEEN THE SATURATION TEMPERATURE CORRESPONDING TO THE HIGH-PRESSURE LIQUID PIPE OUTLET PRESSURE AND THE FIRST PRESET TEMPERATURE THRESHOLD

FIG. 9

S301

ADJUSTING FIRST OPERATING PARAMETERS OF AN AIR CONDITIONING SYSTEM, WHERE THE FIRST OPERATING PARAMETERS INCLUDE A FREQUENCY OF A COMPRESSOR, A WIND SPEED SETTING, AND AN OPENING DEGREE OF AN ELECTRONIC EXPANSION VALVE

S302

COLLECTING SECOND OPERATING PARAMETERS OF THE AIR CONDITIONING SYSTEM AT A PRESET TIME AFTER THE FIRST OPERATING PARAMETERS HAVE BEEN ADJUSTED, WHERE THE SECOND OPERATING PARAMETERS INCLUDE AN OUTDOOR ENVIRONMENT TEMPERATURE AND OPERATING PARAMETERS OF THE COMPRESSOR

S501

DETERMINING THE REFRIGERANT STATE AT AN INLET OF THE HEAT EXCHANGER ACCORDING TO THE OUTDOOR ENVIRONMENT TEMPERATURE AND THE OPERATING PARAMETERS OF THE COMPRESSOR

S502

DETERMINING THE REFRIGERANT STATE AT THE OUTLET OF THE HEAT EXCHANGER ACCORDING TO THE OUTDOOR ENVIRONMENT TEMPERATURE, THE OPERATING PARAMETERS OF THE HEAT EXCHANGER, AND THE WIND SPEED SETTING, IF THE REFRIGERANT AT THE INLET OF THE HEAT EXCHANGER IS IN THE OVERHEATING STATE

S504

DETERMINING THE REFRIGERANT STATE AT THE OUTLET OF THE HIGH-PRESSURE LIQUID PIPE OF THE AIR CONDITIONER OUTDOOR UNIT ACCORDING TO THE ECONOMIZER INLET TEMPERATURE AND THE ECONOMIZER OUTLET TEMPERATURE, IF THE REFRIGERANT AT THE OUTLET OF THE HEAT EXCHANGER IS IN THE SUPERCOOLING STATE

FIG. 10

100

REFRIGERANT STATE DETECTION
APPARATUS

101

PARAMETER ADJUSTMENT UNIT

102

PARAMETER COLLECTION UNIT

103

REFRIGERANT STATE DETECTION
UNIT

FIG. 11

200

AIR CONDITIONING
SYSTEM

202

MEMORY

203

COMPUTER
PROGRAM

201

PROCESSOR

206

ELECTRONIC
EXPANSION VOLVE

204

COMPRESSOR

207

PRESSURE SENSOR

205

HEAT
EXCHANGER

208

TEMPERATURE
SENSOR

FIG. 12

**EP 4 261 471 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6387276 B
- US 2020200457 A1